# EUROPEAN PATENT APPLICATION

(11) **EP 4 694 100 A1**
(43) Date of publication of application: **11.02.2026**
(21) Application number: 23935101.8
(22) Date of filing: 05.12.2023
(51) Int. Cl.: H04M 1/03

(54) **ELECTRONIC DEVICE**

(30) Priority: 28.04.2023 CN 202310491730
(71) Applicant: Honor Device Co., Ltd., Shenzhen, Guangdong 518040 (CN)
(72) Inventor: ZHOU, Guotong, Shenzhen, Guangdong 518040 (CN); WANG, Chuanguo, Shenzhen, Guangdong 518040 (CN); ZHANG, Di, Shenzhen, Guangdong 518040 (CN); YAN, Bin, Shenzhen, Guangdong 518040 (CN); ZHANG, Xueyu, Shenzhen, Guangdong 518040 (CN)
(74) Representative: Gill Jennings & Every LLP
(86) International application number: PCT/CN2023/136559
(87) International publication number: WO 2024/221934

(57) **Abstract**

This application provides an electronic device, and relates to the field of electronic product technologies, to reduce a thickness of the electronic device and improve portability and tactile experience of the electronic device. The electronic device includes a screen and a speaker module. The screen includes a first screen part, and the first screen part includes a first display surface. The speaker module is located at a side that faces away from the first display surface and that is of the first screen part, and the speaker module includes a core. A front cavity of the speaker module is arranged between the core and the first screen part, and at least a part of the first screen part forms a wall plate of the front cavity. The electronic device provided in this application is configured to play voice or music.

## Description

This application claims priority to Chinese Patent Application No. 202310491730.5, filed with the China National Intellectual Property Administration on April 28, 2023 and entitled "ELECTRONIC DEVICE", which is incorporated herein by reference in its entirety.

### TECHNICAL FIELD

This application relates to the field of electronic product technologies, and in particular, to an electronic device.

### BACKGROUND

Electronic devices such as a mobile phone, a tablet computer, and an in-vehicle terminal have speaker modules. The speaker modules are configured to convert electrical signals into sound signals for output. To improve portability and tactile experience of the electronic devices, the electronic devices (especially, foldable-screen display devices) gradually develop towards thinning, and the speaker modules in the existing technologies are usually one of bottlenecks for reducing thicknesses of the electronic devices.

### SUMMARY

This application provides an electronic device, to reduce a thickness of the electronic device and improve portability and tactile experience of the electronic device.

To achieve the foregoing objectives, this application provides an electronic device. The electronic device includes a screen and a speaker module. The screen includes a first screen part, and the first screen part includes a first display surface. The speaker module is located at a side that faces away from the first display surface and that is of the first screen part. The speaker module includes a core. A front cavity of the speaker module is arranged between the core and the first screen part, and at least a part of the first screen part forms a wall plate of the front cavity.

In this way, there is no need to provide a separate wall plate by using the at least a part of the first screen part to form the wall plate of the front cavity, to avoid thickness superimposition, which is beneficial to reducing a stack thickness of the whole machine, further thinning the electronic device, and improving portability and tactile experience of the electronic device.

In a possible implementation, the speaker module further includes a housing, and the core is located in the housing. A wall plate that faces the first screen part and that is of the housing is the first wall plate, the first wall plate is provided with a first opening, and the first opening is located between the core and the first screen part. In this way, the speaker module has a simple structure, and the core may be protected by using the housing, to reduce a probability of damage to the core.

In a possible implementation, the first wall plate includes a first wall plate part, and the first wall plate part is located at a peripheral side of the first opening. A sound output channel of the speaker module is arranged between the first wall plate part and the first screen part, the sound output channel communicates with the front cavity, and the first wall plate part forms a wall plate of the sound output channel. In this way, the speaker module is not provided with a wall plate that is located at a side of the sound output channel and that is close to the screen, that is, the design is chin-free, so that thickness superimposition can be avoided, which is beneficial to reducing a stack thickness of the whole machine and further thinning the electronic device.

In a possible implementation, an end that faces the first opening and that is of the first wall plate part is a first end, and an end that that is away from the first opening and that is of the first wall plate part is a second end. From the first end to the second end, the first wall plate part is inclined to a direction away from the first screen part. In this way, the sound output channel is arranged in an inclined manner, and a sound output effect is good.

In a possible implementation, the electronic device further includes a first middle frame, the first middle frame includes a first middle plate, the first middle plate is located between the first screen part and the speaker module, the first middle plate is provided with a second opening, and at least a part of the second opening is opposite to at least a part of the first opening. In this way, an edge of the first middle plate at the second opening forms at least a part of a side wall of the front cavity, and a side wall does not need to be separately provided. Therefore, the structure is simple.

In a possible implementation, the first middle plate includes a first middle plate part, the first middle plate part is located at a peripheral side of the second opening, and the first middle plate part is opposite to the first wall plate part. The sound output channel of the speaker module is located between the first wall plate part and the first middle plate part, and the first middle plate part forms the wall plate of the sound output channel. In this way, the first middle plate part forms a wall plate that is away from the first wall plate part and that is of the sound output channel, and the wall plate of the sound output channel does not need to be separately arranged, so that thickness superimposition can be avoided, which is beneficial to reducing a stack thickness of the whole machine and further thinning the electronic device.

In a possible implementation, an edge that faces the first opening and that is of the first wall plate part is the first edge, and a projection of the first edge on the first screen part is the first projection. The edge of the first middle plate at the second opening includes a second edge facing the first middle plate part and a third edge away from the first middle plate part. A projection of the second edge on the first screen part is a second projection, and a projection of the third edge on the first screen part is a third projection. The first projection is located between the second projection and the third projection. A part of the first screen part opposite to the second opening is a first screen unit, a part of the first screen unit located between the first projection and the third projection is a first screen subunit, and a part of the first screen unit located between the first projection and the second projection is a second screen subunit. The first screen subunit forms a wall plate that is away from the core and that is of the front cavity. The second screen subunit forms another part of wall plate that is away from the first wall plate part and that is of the sound output channel. In this way, the first middle plate part and the first wall plate part are arranged in a staggered manner in a length direction of the sound output channel. When the first wall plate part is inclined from the first end to the second end to a direction away from the first screen part, it can be ensured that heights of the sound output channels at respective positions in the length direction of the sound output channel are approximately equal. Therefore, it is beneficial to improving air flow smoothness and improving a sound effect of the speaker module.

In a possible implementation, the first middle frame further includes a first frame segment. The first frame segment is connected to an edge of the first middle plate, and the first frame segment is located at a side that is away from the second opening and that is of the first middle plate part. The first frame segment is provided with at least one sound output hole, and the at least one sound output hole communicates with the sound output channel. In this way, a sound signal generated by the speaker module may be transmitted to a user through the sound output hole.

In a possible implementation, the electronic device further includes a first sealing ring. The first sealing ring is located between the housing of the speaker module and the first middle frame. The first sealing ring is arranged surrounding the first opening and the first wall plate part. The first sealing ring is further arranged surrounding the second opening, the first middle plate part, and the at least one sound output hole. In this way, a gap between the speaker module and the first middle frame may be sealed by using the first sealing ring, to prevent air leakage, improve the sound effect of the speaker module, and avoid voice leakage or noise.

In a possible implementation, the housing further includes a second wall plate, the second wall plate is connected to an edge of the first wall plate, and the second wall plate is located at a side that is away from the first opening and that is of the first wall plate part. The first sealing ring includes a first sealing segment and a second sealing segment opposite to each other and spaced apart from each other. The first sealing segment is located between the first wall plate and the first middle plate, the first sealing segment is located at a side that is away from the first wall plate part and that is of the first opening, and the first sealing segment is further located at a side that is away from the first middle plate part and that is of the second opening. The second sealing segment is located between the second wall plate and the first frame segment, the second sealing segment is located at a side that is away from the first opening and that is of the first wall plate part, and the second sealing segment is further located at a side that is away from the first middle plate part and that is of the at least one sound output hole. The first sealing segment forms one end portion of the first sealing ring in a length direction of the speaker module, the second sealing segment forms the other end portion of the first sealing ring in the length direction of the speaker module, and both end portions of the first sealing ring in the length direction of the speaker module are located between the housing and the first middle frame, to avoid a sealing segment misalignment, ensure sealing effectiveness, and simplify a sealing difficulty.

In a possible implementation, the first sealing ring further comprises a third sealing segment and a fourth sealing segment opposite to each other and spaced apart from each other. The third sealing segment is connected between one end of the first sealing segment and one end of the second sealing segment, and the fourth sealing segment is connected between the other end of the first sealing segment and the other end of the second sealing segment. The third sealing segment is located at one side of the first opening and the first wall plate part, and the fourth sealing segment is located at the other side of the first opening and the first wall plate part. A part of the third sealing segment is located between the first wall plate and the first middle plate, and another part of the third sealing segment is located between the second wall plate and the first frame segment. Similarly, a part of the fourth sealing segment is located between the first wall plate and the first middle plate, and another part of the fourth sealing segment is located between the second wall plate and the first frame segment. The third sealing segment forms one end portion of the first sealing ring in a width direction of the speaker module, the fourth sealing segment forms the other end portion of the first sealing ring in the width direction of the speaker module, and both end portions of the first sealing ring in the width direction of the speaker module are located between the housing and the first middle frame. This can also avoid the sealing segment misalignment, ensure the sealing effectiveness, and simplify the sealing difficulty.

In a possible implementation, the first sealing ring includes a first sealing foam layer and a first sealing adhesive layer, and both the first sealing foam layer and the first sealing adhesive layer are arranged surrounding the first opening, the first wall plate part, the second opening, the first middle plate part, and the at least one sound output hole. The first sealing foam layer is in contact with the housing of the speaker module, and the first sealing adhesive layer is adhered between the first sealing foam layer and the first middle frame, or the first sealing foam layer is in contact with the first middle frame, and the first sealing adhesive layer is adhered between the first sealing foam layer and the housing of the speaker module. In this way, the gap between the speaker module and the first middle frame may be sealed by using the first sealing foam layer and the first sealing adhesive layer. In addition, the first sealing foam layer may be compressed, and can adapt to different gaps between the speaker module and the first middle frame. Therefore, an application range is relatively wide.

In a possible implementation, the electronic device further includes a second sealing ring. The second sealing ring is located between the first middle plate and the first screen part, and the second sealing ring is arranged surrounding the second opening. In this way, the gap between the first middle plate and the first screen part may be sealed by using the second sealing ring, to prevent the air leakage, improve the sound effect of the speaker module, and avoid the voice leakage or the noise.

In a possible implementation, the second sealing ring is an adhesive material. While performing a sealing function, the adhesive material can further implement adhesion between the screen and the first middle plate, and can reduce structural complexity of the electronic device.

In a possible implementation, the first screen part further includes a back surface facing away from the first display surface, and an area that is opposite to the second opening and that is on the back surface is provided with a reinforcement member. Structural strength of a part (that is, the first screen unit) of the first screen part opposite to the second opening may be enhanced by using the reinforcement member, to reduce a possibility of depression, deformation, and breakage.

A material of the reinforcement member includes, but is not limited to, a metal and a plastic. The metal includes, but is not limited to, stainless steel, aluminum alloy, magnalium, titanium alloy, and the like. The plastic includes, but is not limited to, a polycarbonate (polycarbonate, PC), PC+glass fiber and an acrylonitrile butadiene styrene (acrylonitrile butadiene styrene plastic, ABS) plastic. The reinforcement member may be in a sheet shape, a strip shape, a thread shape, a plate shape, a sheet shape, a mesh shape, or the like.

In a possible implementation, the first screen part may include a protection cover panel, a display panel, and a support member that are stacked sequentially. The support member is also referred to as a bamboo book. A surface that faces away from the display panel and that is of the protection cover plate forms the first display surface, and a surface that faces away from the display panel and that is of the support member forms the back surface. Based on this, the reinforcement member is arranged on the support member. Specifically, the reinforcement member may be soldered to the support member, or may be adhered to the support member, or may be integrally formed with the support member, that is, the reinforcement member and the support member are an integral structural member.

In a possible implementation, an edge that faces the first opening and that is of the first wall plate part is the first edge, and a projection of the first edge on the first screen part is the first projection. The core includes a vibration diaphragm, and the vibration diaphragm includes a surround. The surround includes a first surround portion facing the first wall plate part, and a projection of the first surround portion on the first screen part is a fourth projection. The reinforcement member is located at a side that is away from the first projection and that is of the fourth projection. In this way, the reinforcement member can be prevented from affecting a height of the front cavity at the first surround portion, to ensure the sound effect of the speaker module.

In a possible implementation, the screen further includes a second screen part connected to the first screen part. The electronic device further includes a first housing, a second housing, and a rotation axis mechanism, the first screen part is arranged on the first housing, the second screen part is arranged on the second housing, the rotation axis mechanism is arranged between the first housing and the second housing, and the speaker module is accommodated in the first housing. In other words, the speaker module is used in a foldable-screen device, which can reduce a thickness of the foldable-screen device, and improve portability and tactile experience of the foldable-screen device.

### BRIEF DESCRIPTION OF DRAWINGS

FIG. 1 is a three-dimensional view of an electronic device according to some embodiments of this application;
FIG. 2 is a schematic diagram of an exploded structure of the electronic device shown in FIG. 1;
FIG. 3 is a schematic diagram of a structure when the electronic device shown in FIG. 1 is in a folded state;
FIG. 4 is a schematic diagram of another structure when the electronic device shown in FIG. 1 is in a folded state;
FIG. 5 is a three-dimensional view of an assembly structure of a speaker module and a dustproof structure according to some embodiments of this application;
FIG. 6 is a schematic diagram of an exploded structure of the speaker module in the assembly structure shown in FIG. 5;
FIG. 7 is a three-dimensional sectional view of the assembly structure shown in FIG. 5 in a line A-A;
FIG. 8 is a schematic diagram of a cross-sectional structure of the speaker module and the dustproof structure shown in FIG. 5 used in the electronic device shown in FIG. 1 in a line B-B;
FIG. 9 is a schematic diagram of relative positions of the speaker module, a first middle frame, and the dustproof structure in the electronic device shown in FIG. 8;
FIG. 10 is a three-dimensional view of an assembly structure of the first middle frame and the dustproof structure in the electronic device shown in FIG. 8;
FIG. 11 is a schematic diagram of an exploded structure of the first middle frame and the dustproof structure in the assembly structure shown in FIG. 10;
FIG. 12 is a three-dimensional sectional view of the assembly structure shown in FIG. 10 in a line C-C;
FIG. 13 is a schematic diagram of a cross-sectional structure of the dustproof structure in the assembly structure shown in FIG. 12;
FIG. 14 is a three-dimensional view of a speaker module according to some other embodiments of this application;
FIG. 15 is a three-dimensional view of the speaker module shown in FIG. 14 viewed in a direction D1;
FIG. 16 is a schematic diagram of an exploded structure of the speaker module shown in FIG. 14;
FIG. 17A is a three-dimensional view of a core according to some embodiments of this application;
FIG. 17B is a schematic diagram of a cross-sectional structure of the core shown in FIG. 17A;
FIG. 18 is a schematic diagram of a cross-sectional structure of the speaker module shown in FIG. 14 used in the electronic device shown in FIG. 1 in a line B-B;
FIG. 19 is a schematic diagram of a structure of the electronic device shown in FIG. 18 after a first back cover is hidden;
FIG. 20 is a schematic diagram of a cross-sectional structure of an electronic device according to some other embodiments of this application;
FIG. 21 is a schematic diagram of an exploded structure of the electronic device shown in FIG. 18;
FIG. 22 is a schematic diagram of a structure existing when the exploded structure shown in FIG. 21 is viewed in a direction D2;
FIG. 23 is a schematic diagram of an arrangement position of a first sealing ring on a first middle frame in the electronic device shown in FIG. 21 and FIG. 22;
FIG. 24 is a schematic diagram of an arrangement position of a first sealing ring on a speaker module in the electronic device shown in FIG. 21 and FIG. 22;
FIG. 25 is a schematic diagram of a cross-sectional structure of a first sealing ring according to some embodiments of this application;
FIG. 26 is a schematic diagram of a cross-sectional structure of a first sealing ring according to some other embodiments of this application;
FIG. 27 is a schematic diagram of relative positions of a first middle frame and a second sealing ring in the electronic device shown in FIG. 21 and FIG. 22;
FIG. 28 is a three-dimensional view of a dustproof structure according to some embodiments of this application;
FIG. 29 is a three-dimensional view of an assembly structure of a dustproof structure and a first middle frame in the electronic device shown in FIG. 18;
FIG. 30 is a three-dimensional sectional view of the assembly structure shown in FIG. 29 in a line E-E;
FIG. 31 is a three-dimensional sectional view of the dustproof structure shown in FIG. 28 in a line F-F;
FIG. 32 is a schematic diagram of a structure of a dustproof structure according to some other embodiments of this application;
FIG. 33 is a schematic diagram of a cross-sectional structure of an electronic device according to some other embodiments of this application;
FIG. 34 is a schematic diagram of an assembly structure of a speaker module and a dustproof structure according to some other embodiments of this application; and
FIG. 35 is a schematic diagram of an assembly structure of a speaker module and a dustproof structure according to some other embodiments of this application.

### DESCRIPTION OF EMBODIMENTS

In embodiments of this application, the terms "first", "second", "third", "fourth", "fifth", and "sixth" are used merely for the purpose of description, and shall not be construed as indicating or implying relative importance or implying a quantity of indicated technical features. Therefore, features defining "first", "second", "third", "fourth", "fifth", and "sixth" may explicitly or implicitly include one or more such features.

In embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by a sentence "including one ..." does not exclude that there are still other same elements in the process, method, object, or apparatus.

In embodiments of this application, unless otherwise specified, description of "parallel" represents that being approximately parallel within a specific error range is allowed, and the error range may be a range in which a deviation angle is less than or equal to 5° relative to absolute parallel.

Embodiments of this application provide an electronic device. The electronic device is a device having a speaker module. Specifically, the electronic device may be a user equipment (user equipment, UE), a terminal (terminal), or the like. For example, the electronic device may be a mobile terminal or a stationary terminal, such as a tablet computer (portable android device, PAD), a personal digital assistant (personal digital assistant, PDA), a handheld device having a wireless communication function, a computing device, an on-board device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), or a wireless terminal in a smart home (smart home). A form of the electronic device is not specifically limited in embodiments of this application.

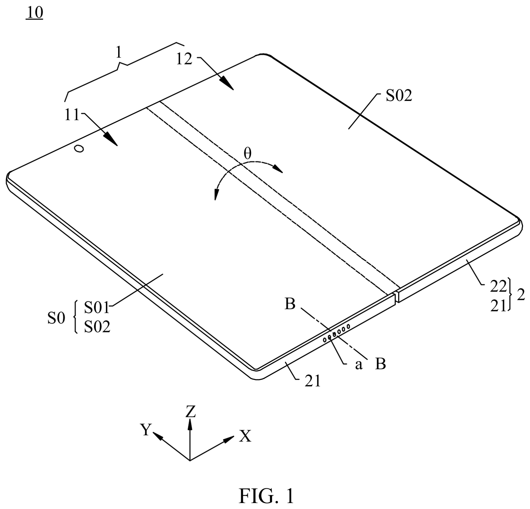

Referring to FIG. 1, FIG. 1 is a three-dimensional view of an electronic device 10 according to some embodiments of this application. An example in which the electronic device 10 is a foldable-screen device is exemplarily described in this embodiment and the following embodiments. The foldable-screen device may be, for example, a foldable-screen mobile phone. In FIG. 1, the foldable-screen device is in an unfolded state. In this state, the electronic device is approximately in a rectangular flat panel shape. Based on this, to facilitate the descriptions of the following embodiments, an XYZ coordinate system is established for the electronic device 10 in the unfolded state. A length direction of the electronic device 10 is defined as an X-axis direction, a width direction of the electronic device 10 is defined as a Y-axis direction, and a thickness direction of the electronic device 10 is defined as a Z-axis direction. It may be understood that, the coordinate system of the electronic device 10 may be flexibly set based on an actual requirement. This is not specifically limited herein. In some other embodiments, a shape of the electronic device 10 may alternatively be a square flat plate shape, a circular flat plate, an oval flat plate, or the like.

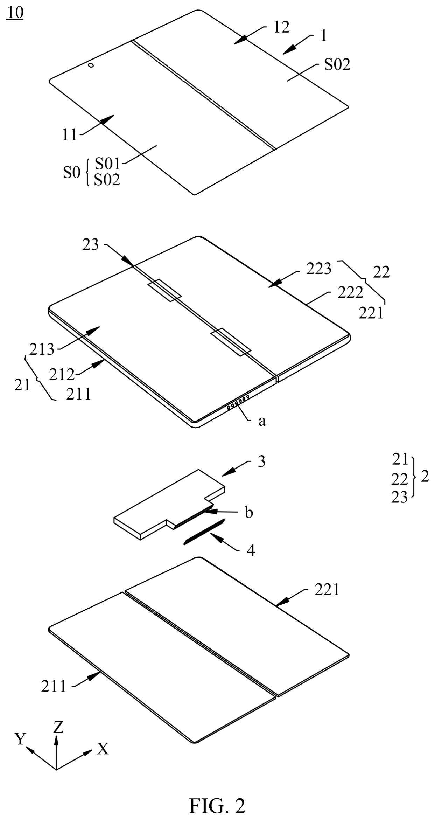

Referring to FIG. 1 and FIG. 2 together, FIG. 2 is a schematic diagram of an exploded structure of the electronic device 10 shown in FIG. 1. The electronic device 10 includes a screen 1, a supporting apparatus 2, a speaker module 3, and a dustproof structure 4.

The screen 1 is configured to display information such as an image and a video. The screen 1 may be an organic light-emitting diode (organic light-emitting diode, OLED) screen, a micro organic light-emitting diode (micro organic light-emitting diode) screen, a quantum dot light emitting diode (quantum dot light emitting diode, QLED) screen, a liquid crystal display (liquid crystal display, LCD), or the like.

The screen 1 includes a display surface S0, and a user may view, by using the display surface S0, an image or a video displayed on the screen 1. The screen 1 has a back surface side, and the back surface side refers to a side that faces away from the display surface S0 and that is of the screen 1.

The support apparatus 2 is located at the back surface side of the screen 1, and is fixed to the screen 1. The support apparatus 2 is configured to support the screen 1 and protect internal electronic components.

In some embodiments, the support apparatus 2 includes a first housing 21 and a second housing 22. When the electronic device 10 is another product, the electronic device 10 may alternatively not include the second housing 22, or may include, in addition to the first housing 21 and the second housing 22, a third housing, a fourth housing, a fifth housing, or the like. This is not specifically limited in this application.

The first housing 21 and the second housing 22 are configured to support the screen 1. Specifically, referring to FIG. 1 mainly, the screen 1 includes a first screen part 11 and a second screen part 12, the display surface S0 includes a first display surface S01 and a second display surface S02, the first display surface S01 is located at the first screen part 11, and the second display surface S02 is located at the second screen part 12. The first housing 21 is located at a side that faces away from the first display surface S01 and that is of the first screen part 11, and the first housing 21 supports the first screen part 11. The second housing 22 is located at a side that faces away from the second display surface S02 and that is of the second screen part 12, and the second housing 22 supports the second screen part 12.

Referring to FIG. 2 mainly, the first housing 21 may include a first back cover 211 and a first frame 212. The first back cover 211 and the first screen part 11 are spaced apart from each other, and the first frame 212 is arranged at an edge of the first back cover 211. The first frame 212 may be adhered and fixed to the first back cover 211, or may be integrally formed with the first back cover 211. The first screen part 11 is adhered and fixed to the first frame 212.

In some embodiments, the first housing 21 may further include a first middle plate 213, the first middle plate 213 is located between the first screen part 11 and the first back cover 211, and the first middle plate 213 is fixed to the first frame 212. A structure formed by the first middle plate 213 and the first frame 212 may be referred to as a first middle frame. In addition, in other embodiments, the first housing 21 may alternatively not include the first middle plate 213.

Similarly, still referring to FIG. 2, the second housing 22 includes a second back cover 221 and a second frame 222. The second back cover 221 and the second screen part 12 are spaced apart from each other. The second frame 222 may be adhered and fixed to the second back cover 221, or may be integrally formed with the second back cover 221. The second screen part 12 is adhered and fixed to the second frame 222.

In some embodiments, the second housing 22 further includes a second middle plate 223, the second middle plate 223 is located between the second screen part 12 and the second back cover 221, and the second middle plate 223 is fixed to the second frame 222. A structure formed by the second middle plate 223 and the second frame 222 may also be referred to as a second middle frame. In addition, in other embodiments, the second housing 22 may alternatively not include the second middle plate 223.

In some embodiments, at least one of the first back cover 211 and the second back cover 221 may be a display screen. When the electronic device 10 is in an inward folded state, the display screen is visible to the user. In this way, when the electronic device 10 is in the folded state, an image or information may be presented to the user by using the display screen, to improve user experience.

The first housing 21 and the second housing 22 are configured to accommodate electronic components such as a battery, a vibration motor, the speaker module 3, the dustproof structure 4, and a camera module.

In some embodiments, referring to FIG. 2, the speaker module 3 and the dustproof structure 4 are located at the side that faces away from the first display surface S01 and that is of the first screen part 11, and the speaker module 3 and the dustproof structure 4 are accommodated in the first housing 21.

Specifically, referring to FIG. 2, the speaker module 3 and the dustproof structure 4 may be arranged in a space formed by the first back cover 211, the first frame 212, and the first middle plate 213. The first frame 212 is provided with a sound output hole a, the speaker module 3 is provided with a sound output channel b, and the sound output channel b communicates with the sound output hole a. When the speaker module 3 operates, a generated sound signal may be output by the sound output hole a, to be heard by the user.

Still referring to FIG. 2, the dustproof structure 4 is arranged between the sound output channel b and the sound output hole a, to prevent impurities such as water and dirt outside the electronic device 10 from entering an interior of the speaker module 3 through the sound output hole a and generating noise.

Still referring to FIG. 2, the supporting apparatus 2 further includes a rotation axis mechanism 23. The first housing 21 and the second housing 22 may be rotatably connected by using the rotation axis mechanism 23, so that the screen 1 can be folded from the unfolded state shown in FIG. 1 to the folded state.

When the screen 1 is in the unfolded state, referring to FIG. 1, an angle θ between the first screen part 11 and the second screen part 12 on a display side is approximately 180 degrees (°), so that large-screen display can be implemented, to provide richer information for the user and bring better use experience to the user. The display side refers to a side facing a display surface of the screen 1. When the screen 1 is in the unfolded state and operates, the user may view, from the display side, an image or a video displayed on the screen 1.

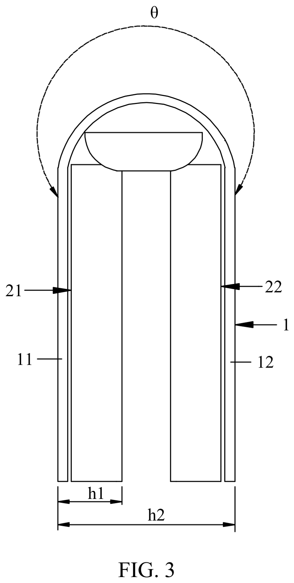

When the screen 1 is in the folded state, referring to FIG. 3, FIG. 3 is a schematic diagram of a structure of the electronic device 10 shown in FIG. 1 when the electronic device 10 is in the folded state. The angle θ may be approximately 360°, that is, the electronic device 10 is an outward foldable-screen mobile phone.

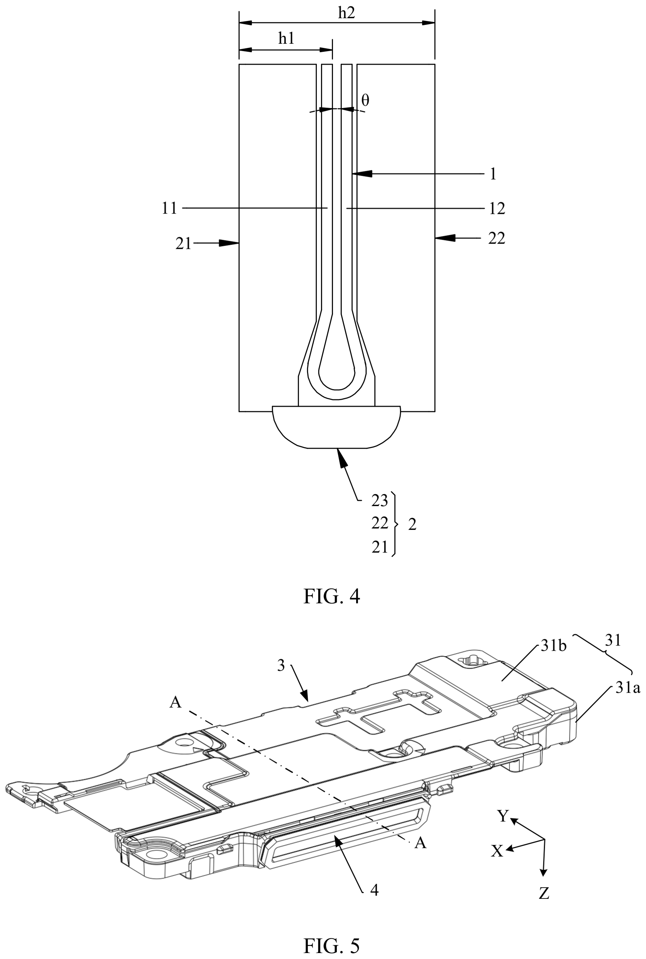

When the screen 1 is in the folded state, referring to FIG. 4, FIG. 4 is a schematic diagram of another structure when the electronic device 10 shown in FIG. 1 is in the folded state. The angle θ may alternatively be approximately 0°, that is, the electronic device 10 is an inward foldable-screen mobile phone.

In this way, the foldable-screen mobile phone has a small size, and is easy to carry.

When the screen 1 is in the unfolded state, a thickness of a foldable display device is a first thickness h1. When the screen 1 is in the folded state, a thickness of the foldable display device is a second thickness h2. The second thickness h2 is greater than or equal to twice the first thickness h1.

Based on this, to improve portability and tactile experience, there are increasing efforts to thin the foldable display device in the unfolded state, to reduce the thickness in the folded state. However, the speaker module 3 and the dustproof structure 4 in the electronic device 10 are bottlenecks for further reducing a thickness the electronic device 10.

The following analyzes the foregoing technical problems in detail with reference to specific examples.

Referring to FIG. 5, FIG. 5 is a three-dimensional view of an assembly structure of the speaker module 3 and the dustproof structure 4 according to some embodiments of this application. The speaker module 3 includes a housing 31.

The housing 31 may include a lower cover 31a and an upper cover 31b. The lower cover 31a may be fixed to the upper cover 31b by using a process such as adhering, clamping, screwing connecting, or ultrasonic soldering. In this way, a composition structure of the housing 31 is simple, and assembly is convenient.

In some other embodiments, the lower cover 31a and the upper cover 31b may alternatively be integrally formed, that is, the housing 31 is an integral structural member. Alternatively, the housing 31 may have another structural composition manner. This is not specifically limited in this application.

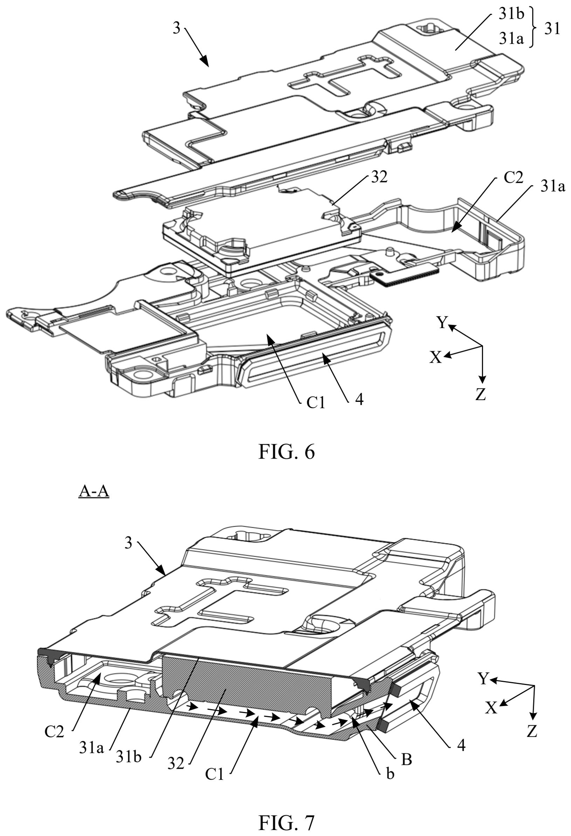

Referring to FIG. 6 and FIG. 7, FIG. 6 is a schematic diagram of an exploded structure of the speaker module 3 in the assembly structure shown in FIG. 5, and FIG. 7 is a three-dimensional sectional view of the assembly structure shown in FIG. 5 in a line A-A. The speaker module 3 further includes a core 32.

The core 32 is located in the housing 31, and a front cavity C1 is arranged between the core 32 and a part of the lower cover 31a. The housing 31 is further provided with a sound output channel b. Referring to FIG. 7, a part b of the housing 31 located at a lower side of the sound output channel b is a chin of the sound output channel b. The sound output channel b communicates with the front cavity C1. During operation, the core 32 may push air in the front cavity C1 to flow to the sound output channel b, to form a sound wave, so that an electric signal is converted into a sound signal. For a flow path, refer to an arrow in FIG. 7.

A rear cavity C2 is arranged between the core 32, the upper cover 31b, and another part of the lower cover 31a. A volume of the rear cavity C2 affects sensitivity and low-frequency performance of the speaker module 3. A larger volume of the rear cavity C2 indicates higher sensitivity of the speaker module 3 and better low-frequency performance.

Referring to FIG. 7 mainly, a stack thickness of the speaker module 3 is equal to a sum of a wall thickness of the lower cover 31a, a height of the front cavity C1, a height of the core 32, a wall thickness of the upper cover 31b, and a height of a gap between the upper cover 31b and the core 32. Therefore, the stack thickness of the speaker module 3 is large.

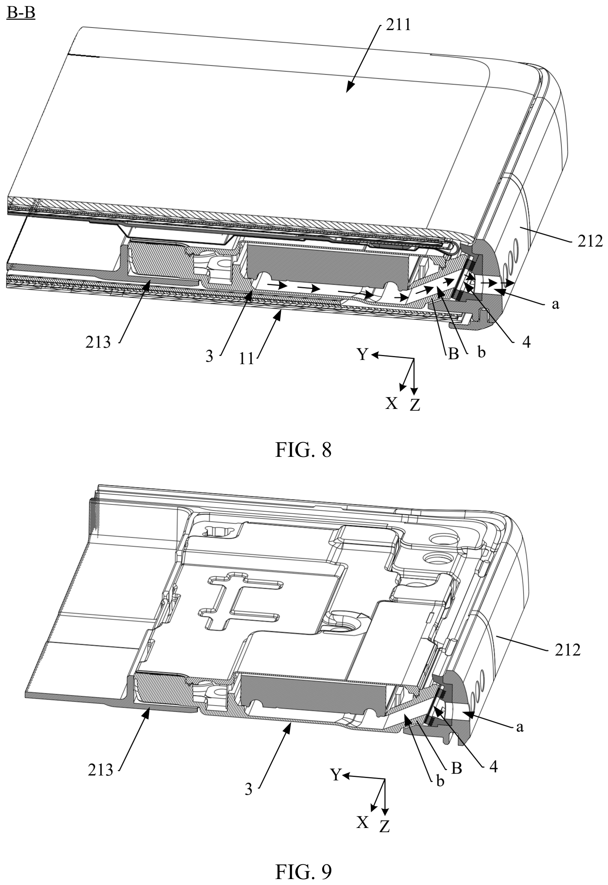

When the speaker module 3 is used in the electronic device 10 shown in FIG. 1, referring to FIG. 8, FIG. 8 is a schematic diagram of a cross-sectional structure of the speaker module 3 and the dustproof structure 4 shown in FIG. 5 used in the electronic device 10 shown in FIG. 1 in a line B-B. A stack thickness of the electronic device 10 at the speaker module 3 is approximately equal to a sum of a thickness of the first screen part 11, a thickness of the speaker module 3, and a thickness of the first back cover 211. Therefore, because the stack thickness of the electronic device 10 at the speaker module 3 is large, it is difficult to reduce the thickness of the electronic device 10.

In addition, referring to FIG. 8 and FIG. 9 together, FIG. 9 is a schematic diagram of relative positions of the speaker module 3, the first middle frame, and the dustproof structure 4 in the electronic device 10 shown in FIG. 8. The dustproof structure 4 is arranged between the sound output channel b and the sound output hole a on the first frame 212, and is configured to prevent impurities such as water and dirt outside the electronic device 10 from entering the interior of the speaker module 3 through the sound output hole a and generating the noise.

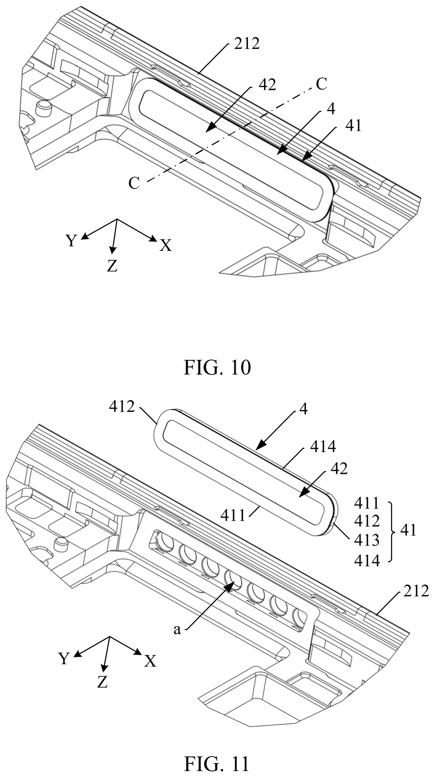

Referring to FIG. 10, FIG. 10 is a three-dimensional view of an assembly structure of the first middle frame and the dustproof structure 4 in the electronic device 10 shown in FIG. 8. The dustproof structure 4 includes a support frame 41 and a dustproof mesh 42.

Referring to FIG. 11 mainly, FIG. 11 is a schematic diagram of an exploded structure of the first middle frame and the dustproof structure 4 in the assembly structure shown in FIG. 10. The support frame 41 in a plate shape, and a material of the support frame 41 includes, but is not limited to, at least one of polycarbonate, a glass fiber, a stainless steel, and a foam. In some embodiments, the support frame 41 is the foam.

The support frame 41 includes a first frame plate segment 411, a second frame plate segment 412, a third frame plate segment 413, and a fourth frame plate segment 414. The first frame plate segment 411 is arranged opposite to the fourth frame plate segment 414, and the second frame plate segment 412 is arranged opposite to the third frame plate segment 413. The first frame plate segment 411, the second frame plate segment 412, the fourth frame plate segment 414, and the third frame plate segment 413 are sequentially connected head to tail to form a rectangular frame structure.

The dustproof mesh 42 is supported between the first frame plate segment 411, the second frame plate segment 412, the fourth frame plate segment 414, and the third frame plate segment 413.

The first frame plate segment 411 and the fourth frame plate segment 414 are respectively arranged on two opposite sides of the sound output hole a in the Z-axis direction. A height of the dustproof structure 4 in the Z-axis direction is a sum of a height of the first frame plate segment 411 in the Z-axis direction, a height of the fourth frame plate segment 414 in the Z-axis direction, and a height of a part that is of the dustproof mesh 42 and that is located between the first frame plate segment 411 and the fourth frame plate segment 414 in the Z-axis direction.

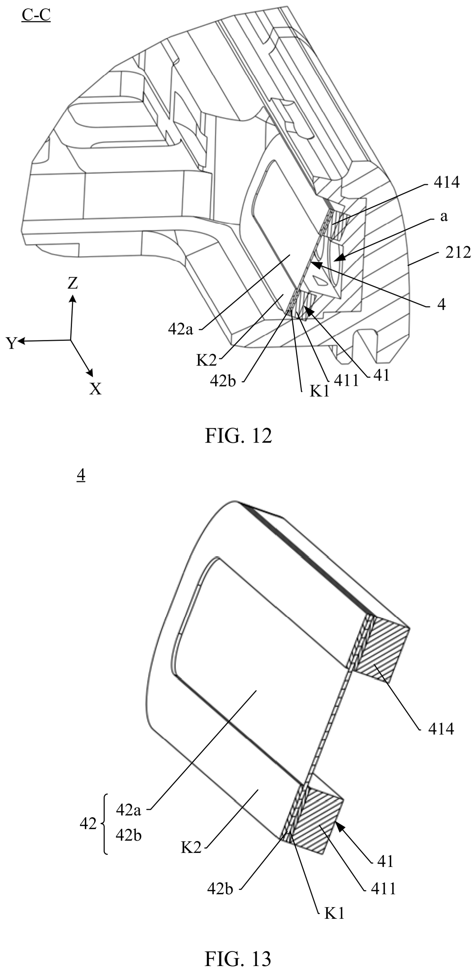

Based on the foregoing descriptions, referring to FIG. 12 and FIG. 13 together, FIG. 12 is a three-dimensional sectional view of the assembly structure shown in FIG. 10 in a line C-C, and FIG. 13 is a schematic diagram of a cross-sectional structure of the dustproof structure 4 in the assembly structure shown in FIG. 12. The dustproof mesh 42 includes a main portion 42a and an edge portion 42b. The main portion 42a is located in an area surrounded by the first frame plate segment 411, the second frame plate segment 412, the fourth frame plate segment 414, and the third frame plate segment 413, the edge portion 42b is arranged surrounding a periphery of the main portion 42a, and the edge portion 42b is stacked on and fixedly connected to the support frame 41.

Based on the foregoing descriptions, still referring to FIG. 12 and FIG. 13, the dustproof structure 4 further includes a first adhesive material layer K1. The first adhesive material layer K1 is arranged between the edge portion 42b and the support frame 41, to adhere the edge portion 42b to the support frame 41.

Based on the foregoing descriptions, still referring to FIG. 12 and FIG. 13. The dustproof structure 4 further includes a second adhesive material layer K2. The second adhesive material layer K2 is arranged on a surface that faces away from the support frame 41 and that is of the edge portion 42b. When the dustproof structure 4 is used in the electronic device 10, with reference to FIG. 7 and FIG. 12, the dustproof structure 4 may be adhered to the housing of the speaker module 3 by using the second adhesive material layer K2. Referring to FIG. 12 mainly, the support frame 41 of the dustproof structure 4 faces the first frame 212. In other embodiments, the dustproof structure 4 may alternatively be adhered to the first frame 212 by using the second adhesive material layer K2. Referring to FIG. 12 mainly, the support frame 41 of the dustproof structure 4 faces the housing of the speaker module 3.

A gap between the speaker module 3 and the first frame 212 may be sealed by using the first adhesive material layer K1 and the second adhesive material layer K2. In addition, the support frame 41 may be compressed, and can adapt to different gaps between the speaker module 3 and the first frame 212. Therefore, an application range is wide.

Generally, the first frame plate segment 411 and the fourth frame plate segment 414 need to maintain a certain width to ensure an adhesion and sealing effect. However, the main portion 42a also needs to maintain a certain width to ensure smooth air flow. Therefore, it is difficult to compress the height of the dustproof structure 4 in the Z-axis direction, and the height of the dustproof structure 4 becomes another bottleneck for further reducing the thickness the electronic device 10.

To resolve the foregoing technical problems, the following sequentially describes a speaker module 3 and a dustproof structure 4 provided in some other embodiments of this application. The speaker module 3 and the dustproof structure 4 are beneficial to reducing an entire thickness of the electronic device 10.

First, the speaker module 3 provided in some other embodiments of this application is described.

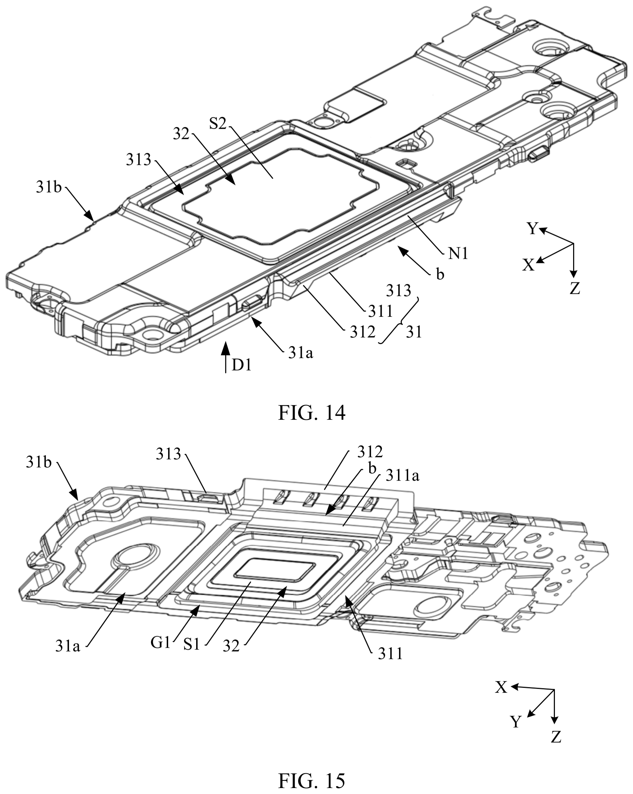

Referring to FIG. 14 and FIG. 15, FIG. 14 is a three-dimensional view of the speaker module 3 according to some other embodiments of this application, and FIG. 15 is a three-dimensional view of the speaker module 3 shown in FIG. 14 when viewed in a direction D1. The speaker module 3 is approximately in a rectangular plate shape. A length direction of the speaker module 3 is consistent with the X-axis direction, a width direction of the speaker module 3 is consistent with the Y-axis direction, and a thickness direction of the speaker module 3 is consistent with the Z-axis direction. A space occupied by the speaker module 3 in the electronic device 10 is approximately in a rectangular shape, which is beneficial to fully using the space.

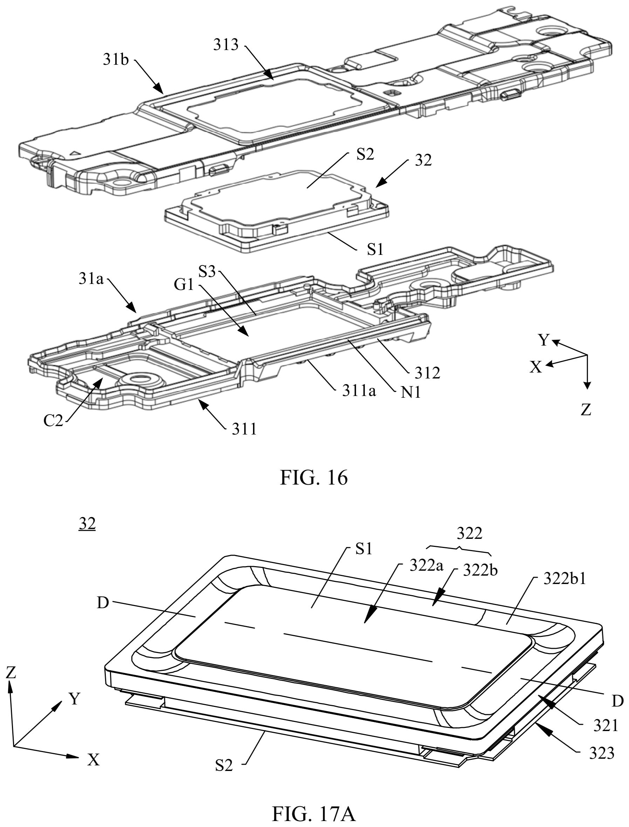

Referring to FIG. 14 to FIG. 16 together, FIG. 16 is a schematic diagram of an exploded structure of the speaker module 3 shown in FIG. 14. The speaker module 3 includes the housing 31 and the core 32.

The housing 31 includes a first wall plate 311, a second wall plate 312, and a third wall plate 313. The first wall plate 311 is opposite to the third wall plate 313, and the second wall plate 312 is connected between the first wall plate 311 and the third wall plate 313. The second wall plate 312 intersects the first wall plate 311, and the second wall plate 312 also intersects the third wall plate 313. "Intersection" means forming an angle, and the angle is greater than 0° and less than 180°. Optionally, an angle between the second wall plate 312 and the first wall plate 311, and an angle between the second wall plate 312 and the third wall plate 313 may be greater than or equal to 45° and less than or equal to 135°.

It should be noted that, in an actual product, shapes of the first wall plate 311 and the third wall plate 313 are usually not absolute flat plate shapes, but main parts of the first wall plate 311 and the third wall plate 313 are approximately in flat plate shapes, and other small parts of the third wall plate 311 and the third wall plate 313 may have another shape such as an inclined shape or an arc surface shape. Therefore, the angle between the second wall plate 312 and the first wall plate 311 in the foregoing embodiments is an angle between a main part of the second wall plate 312 and the main part of the first wall plate 311. Similarly, the angle between the second wall plate 312 and the third wall plate 313 is an angle between the main part of the second wall plate 312 and the main part of the third wall plate 313.

In addition, it should be noted that, because the first wall plate 311, the second wall plate 312, and the third wall plate 313 each have a particular wall thickness, as a stack thickness of the speaker module 3 is reduced, a distance between the first wall plate 311 and the third wall plate 313 in the Z-axis direction is small. At some parts, the first wall plate 311 and the third wall plate 313 may be directly connected to each other in the Z-axis direction. For example, referring to FIG. 14 and FIG. 16 mainly, an end portion of the first wall plate 311 connected to the second wall plate 312 and an end portion of the third wall plate 313 connected to the second wall plate 312 are connected to each other in the Z-axis direction as a whole. The end portion of the third wall plate 313 connected to the second wall plate 312 is marked as N1. Therefore, the first wall plate 311, the second wall plate 312, and the third wall plate 313 described in this application are divided from an appearance of the housing, and it is considered that the first wall plate 311, the second wall plate 312, and the third wall plate 313 are divided based on a fact that the thickness of each wall plate is approximately 0.

In the foregoing embodiments, the first wall plate 311, the second wall plate 312, and the end portion N1 of the third wall plate 313 form at least a part of the lower cover 31a, and a remaining part of the third wall plate 313 forms at least a part of the upper cover 31b. A material of the upper cover 31a and the lower cover 31b includes, but is not limited to, metal and plastic. The lower cover 31a may be fixed to the upper cover 31b by using a process such as adhering, clamping, screwing connecting, or ultrasonic soldering. In this way, a composition structure of the housing 31 is simple, and it is convenient to assemble the core 32 in the housing 31.

In some other embodiments, the lower cover 31a and the upper cover 31b may alternatively be integrally formed, that is, the housing 31 is an integral structural member. Alternatively, the housing 31 may have another structural composition manner. This is not specifically limited in this application.

Referring to FIG. 15 and FIG. 16 mainly, the first wall plate 311 of the lower cover 31a is provided with a first opening G1. A shape of the first opening G1 includes, but is not limited to, a rectangle, a circle, an ellipse, a triangle, a polygon, or the like. An example in which the shape of the first opening 311a is rectangular, a long side of the first opening G1 is parallel to the X-axis direction, and a short side of the first opening G1 is parallel to the Y-axis direction is exemplarily described in this embodiment and the following embodiments. This cannot be considered as a special limitation on this application.

Referring to FIG. 16 mainly, the core 32 may be arranged in the housing 31. Specifically, the core 32 may be arranged between the lower cover 31a and the upper cover 31b. The core 32 is approximately in a rectangular plate shape. A length direction of the core 32 is parallel to the X-axis direction, a width direction of the core 32 is parallel to the Y-axis direction, and a thickness direction of the core 32 is parallel to the Z-axis direction. In other embodiments, the core 32 may alternatively be approximately in a circular plate shape, an elliptic plate shape, a polygonal plate shape, a block-shape, or the like. This is not specifically limited in this application.

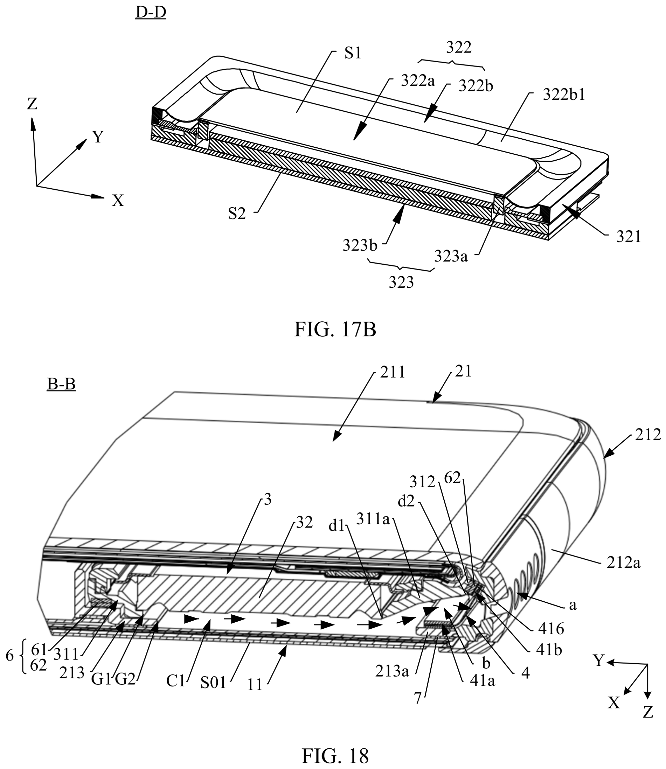

Referring to FIG. 17A and FIG. 17B, FIG. 17A is a three-dimensional view of the core 32 according to some embodiments of this application, and FIG. 17B is a schematic diagram of a cross-sectional structure of the core 32 shown in FIG. 17A. The core 32 may include a basin frame 321, a vibration diaphragm assembly 322, and a driving assembly 323.

The vibration diaphragm assembly 322 is supported on the basin frame 321. The vibration diaphragm assembly 322 may include a dome 322a and a vibration diaphragm 322b connected between the dome 322a and the basin frame 321. The vibration diaphragm 322b includes a surround 322b1 arranged surrounding the dome 322a. A cross-sectional shape of the surround 322b1 is in an arc-shape or an approximate arc-shape, and the surround 322b1 may arch in a direction away from the driving assembly 323, or may arch in a direction close to the driving assembly 323. An example in which the surround 322b1 arches in the direction close to the driving assembly 323 is exemplarily described in FIG. 17A and FIG. 17B. This cannot be considered as a special limitation on this application. When an external force is applied to the surround 322b1, deformation can occur. This enables the dome 322a to vibrate relative to the basin frame in the Z-axis direction. The driving assembly 323 is connected between the dome 322a and the basin frame 321. The driving assembly 323 is configured to drive the dome 322a to vibrate relative to the basin frame 321 in the Z-axis direction.

In some embodiments, referring to FIG. 17B mainly, the driving assembly 323 may include a voice coil 323a and a magnetic circuit system 323b. The voice coil 323a is arranged on the dome 322a, and the magnetic circuit system 323b is arranged on the basin frame 321. When an alternating current is passed into the voice coil 323a, the voice coil 323a cooperates with the magnetic circuit system 323b, to drive the dome 322a to vibrate relative to the basin frame 321 in the Z-axis direction.

The driving assembly 323 is a moving-coil driving assembly, and has a simple structure and high vibration stability. Certainly, the driving assembly 323 may alternatively have another structural form, for example, may be a static driving assembly, an electromagnetic driving assembly, or a piezoelectric driving assembly. This is not specifically limited in this application.

In the foregoing embodiments, still referring to FIG. 17A and FIG. 17B, the basin frame 321 and the driving assembly 323 are located at a same side of the vibration diaphragm assembly 322. Based on this, for ease of description of the following embodiments, a surface that faces away from the basin frame 321 and that is of the vibration diaphragm assembly 322 and the driving assembly 323 is defined as a first surface S1, the first surface S1 is a vibration diaphragm surface of the core 32, the core 32 further includes a second surface S2 facing away from the first surface S1, that is, the second surface S2 is a back surface of the core 32. The second surface S2 may be formed on the magnetic circuit system 323b, or may be formed on the basin frame 321. An example in which the second surface S2 is formed on the magnetic circuit system 323b is exemplarily described in FIG. 17A and FIG. 17B.

Based on the foregoing descriptions, referring back to FIG. 14 to FIG. 16, the core 32, the first wall plate 311 of the lower cover 31a, and the third wall plate 313 of the upper cover 31b are all stacked. In other words, referring to FIG. 16 mainly, the first surface S1 of the core 32 faces the first wall plate 311, and the second surface S2 faces the third wall plate 313; or the first surface S1 faces the third wall plate 313, and the second surface S2 faces the first wall plate 311.

An example in which the first surface S1 faces the first wall plate 311, and the second surface S2 faces the third wall plate 313 is exemplarily described in this embodiment and the following embodiments.

The core 32 may be fixed to an edge of the first wall plate 311 at the first opening G1. In some embodiments, referring to FIG. 16 mainly, the edge of the first wall plate 311 at the first opening G1 is provided with a step surface S3, and an edge area of the first surface S1 of the core 32 may be fixed to the step surface S3 by using a dispensing adhesive. A middle area of the first surface S1 faces the first opening G1.

The core 32 and the housing 31 enclose the rear cavity C2. The volume of the rear cavity C2 affects the sensitivity and the low-frequency performance of the speaker module 3. A larger volume of the rear cavity C2 indicates higher sensitivity of the speaker module 3 and better low-frequency performance. The rear cavity C2 may be filled with sound-absorbing particles, to increase an equivalent space of the rear cavity C2. A material of the sound-absorbing particles includes, but is not limited to, a melamine sound-absorbing particle, a zeolite, glass fiber, or active carbon.

An example in which the core 32 is entirely arranged in the housing 31 is exemplarily described in the foregoing embodiments. In this way, the core 32 may be protected by using the housing 31, to avoid damage to the core 32.

In some other embodiments, the core 32 may alternatively be partially located outside the housing 31. For example, the vibration diaphragm assembly 322 of the core 32 is arranged outside the housing 31. Specifically, the vibration diaphragm assembly 322 is arranged on a side that faces the first screen part 11 and that is of the housing 31, and the vibration diaphragm assembly 322 covers the first opening G1. A part of the driving assembly 323 of the core 32 is located in the first opening G1, and another part of the driving assembly is accommodated in the housing 31. In this embodiment, the core 32 may not be separately provided with the basin frame, and the vibration diaphragm assembly 322 and the driving assembly 323 of the core 32 are supported by using the first wall plate 311. In this way, the speaker module 3 has a simple structure and low costs.

It should be noted that, the following embodiments are further described based on a fact that the core 32 is entirely arranged in the housing 31. This cannot be considered as a special limitation on this application.

Referring to FIG. 18, FIG. 18 is a schematic diagram of a cross-sectional structure of the speaker module 3 shown in FIG. 14 in a line B-B when the speaker module 3 is used in the electronic device 10 shown in FIG. 1. The speaker module 3 is located at a side of that faces away from the first display surface S01 and that is of the first screen part 11, and the speaker module 3 is accommodated in the first housing 21. The first wall plate 311 of the housing 31 in the speaker module 3 faces the first screen part 11. In other words, in all wall plates of the housing 31, the first wall plate 311 is opposite to the first screen part 11, and is closest to the first screen part 11. The first opening G1 is located between the core 32 and the first screen part 11. In other words, a projection of the first opening G1 on the first screen part 11 overlaps a projection of the core 32 on the first screen part 11.

Based on the foregoing descriptions, still referring to FIG. 18, the front cavity C1 of the speaker module 3 is located between the core 32 and the first screen part 11. At least a part of the first screen part 11 forms a wall plate of the front cavity C1, that is, the at least a part of the first screen part 11 is in contact with air in the front cavity C1.

In this way, the at least a part of the screen 1 forms the wall plate of the front cavity C1 in a height direction (that is, the Z-axis direction) of the speaker module 3, so that there is no need to provide a separate wall plate, to avoid thickness superimposition. This is beneficial to reducing a stack thickness of the whole machine, further thinning the electronic device 10, and improving portability and tactile experience of the electronic device.

In some embodiments, referring to FIG. 15 and FIG. 18 together, the first wall plate 311 includes a first wall plate part 311a, and the first wall plate part 311a is located at a peripheral side of the first opening G1. Based on this, referring to FIG. 18 mainly, the sound output channel b of the speaker module 3 is arranged between the first wall plate part 311a and the first screen part 11. The sound output channel b communicates with the front cavity C1, and the first wall plate part 311 a forms a wall plate of the sound output channel b, that is, the first wall plate part 311a is in contact with air in the sound output channel b.

In this way, the speaker module 3 is not provided with a wall plate that is located at a side of the sound output channel b and that is close to the screen 1, that is, the design is chin-free, so that thickness superimposition can be avoided, which is beneficial to reducing the stack thickness of the whole machine and further thinning the electronic device 10.

During operation, the core 32 may push air in the front cavity C1 to flow to the sound output channel b. For a flow path, refer to an arrow in FIG. 18, to form a sound wave, so that an electric signal is converted into a sound signal.

In the foregoing embodiments, the first wall plate part 311a may be parallel to the first screen part 11, or may be inclined relative to the first screen part 11. In some embodiments, referring to FIG. 18 again, an end that faces the first opening G1 and that is of the first wall plate part 311a is defined as a first end d1, and an end that is away from the first opening G1 and that is of the first wall plate part 311a is defined as a second end d2. The end that faces the first opening G1 and that is of the first wall plate part 311a is specifically an end of the first wall plate part 311a that is closest to the first opening G1. From the first end d1 to the second end d2, the first wall plate part 311a is inclined to a direction away from the first screen part 11.

In this way, the sound output channel b is arranged in an inclined manner, and a sound output effect is good.

When the first housing 21 includes the first middle plate 213, referring to FIG. 18 again, the first middle plate 213 is located between the first screen part 11 and the speaker module 3, and the first middle plate 213 is provided with a second opening G2. At least a part of the second opening G2 is opposite to at least a part of the first opening G1. In other words, a projection of the second opening G2 on the first screen part 11 overlaps a projection of the first opening G1 on the first screen part 11. In this way, an edge of the first middle plate 213 at the second opening G2 forms at least a part of a side wall of the front cavity C1, and a side wall does not need to be separately provided. Therefore, the structure is simple.

It should be noted that, in the foregoing embodiments and the following embodiments, unless otherwise specified, the description of a projection of a feature on the first screen part 11 refers to: on a premise that the thickness of the first screen part 11 is ignored, an orthographic projection of the described feature on the first screen part 11 in a direction perpendicular to the first screen part 11.

In some embodiments, referring to FIG. 18 again, the first middle plate 213 includes a first middle plate part 213a. The first middle plate part 213a is located at a peripheral side of the second opening G2. The first middle plate part 213a is opposite to the first wall plate part 311a. In other words, a projection of the first middle plate part 213 on the first wall plate part 311a in a direction perpendicular to the first wall plate part 311a overlaps the first wall plate part 311a, and a projection of the first wall plate part 311a on the first middle plate part 213 in a direction perpendicular to the first middle plate part 213 overlaps the first middle plate part 213.

Based on the foregoing descriptions, optionally, referring to FIG. 18 again, a part of the first screen part 11 covers a surface that faces away from the speaker module 3 and that is of the first middle plate part 213a. In this way, a part of the first screen part 11 is supported by using the first middle plate part 213a, so that the first screen part 11 can be prevented from collapsing under an external force (for example, from a pressing force of a side facing the first display surface S01).

In some embodiments, referring to FIG. 18 again, the sound output channel b of the speaker module 3 is located between the first wall plate part 311a and the first middle plate part 213a, and the first middle plate part 213a forms the wall plate of the sound output channel b.

In this way, the first middle plate part 213a forms the wall plate of the sound output channel b, and the wall plate of the sound output channel b does not need to be separately arranged, so that the thickness superimposition can be avoided, which is beneficial to reducing a stack thickness of the whole machine and further thinning the electronic device 10.

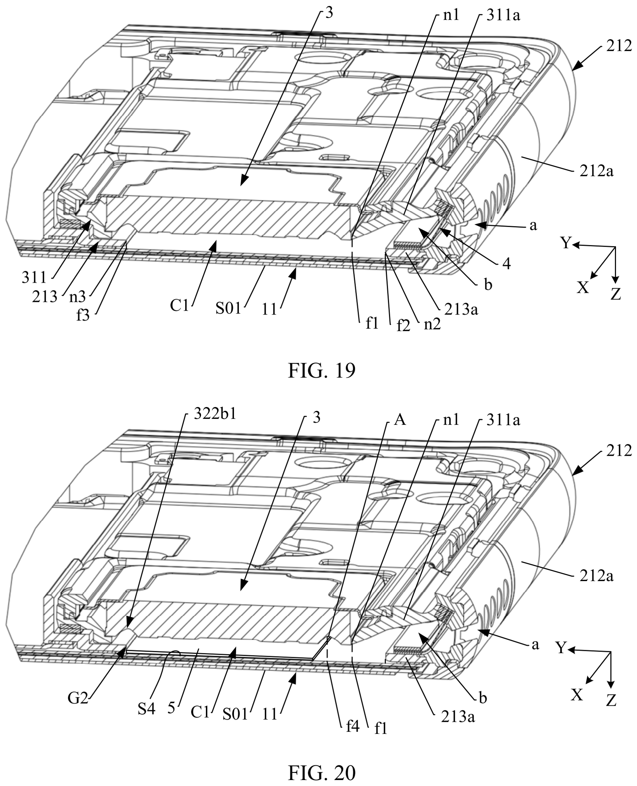

In some embodiments, referring to FIG. 19 mainly, FIG. 19 is a schematic diagram of a structure of the electronic device 10 shown in FIG. 18 after the first back cover 211 is hidden. An edge that faces the first opening G1 and that is of the first wall plate part 311a is a first edge n1, and a projection of the first edge n1 on the first screen part 11 is a first projection f1. The edge of the first middle plate 213 at the second opening G2 includes a second edge n2 facing the first middle plate part 213a and a third edge n3 away from the first middle plate part 213a. A projection of the second edge n2 on the first screen part 11 is a second projection f2, and a projection of the third edge n3 on the first screen part 11 is a third projection f3. The first projection f1 is located between the second projection f2 and the third projection f3.

Based on the foregoing descriptions, a part that is on the first screen part 11 and that is opposite to the second opening G2 is defined as the first screen unit, and an edge of a projection of the second opening G2 on the first screen part 11 coincides with an edge of the first screen unit. A part of the first screen unit located between the first projection f1 and the third projection f3 is a first screen subunit, and a part of the first screen unit located between the first projection f1 and the second projection f2 is a second screen subunit. The first screen subunit forms the wall plate of the front cavity C1. The second screen subunit forms the wall plate of the sound output channel b.

In this way, the first middle plate part 213a and the first wall plate part 311a are arranged in a staggered manner in the length direction of the sound output channel b. When the first wall plate part 311a is inclined from the first end d1 to the second end d2 to a direction away from the first screen part 11, it can be ensured that heights of the sound output channel b at respective positions in the length direction of the sound output channel b are approximately equal. Therefore, it is beneficial to improving air flow smoothness and improving a sound effect of the speaker module 3.

In some embodiments, referring to FIG. 18 and FIG. 19, the first frame 212 includes a first frame segment 212a. The first frame segment 212a is connected to an edge of the first middle plate 213, and the first frame segment 212a is located at a side that is away from the second opening G2 and that is of the first middle plate part 213a. The first frame segment 212a is provided with at least one sound output hole a, where "at least one" indicates a quantity of one or more than one, and the at least one sound output hole a communicates with the sound output channel b. In this way, a sound signal generated by the speaker module 3 may be transmitted to the user through the sound output hole a.

In the embodiments shown in FIG. 18 and FIG. 19, because the second opening G2 is arranged at a position opposite to the first screen unit on the first middle plate 213, the first middle plate 213 lacks support for the first screen unit. In this way, when subjected to an external force from a side facing the first display surface S01, the first screen unit is prone concave deformation or even fracture.

To resolve the foregoing problem, in some embodiments, referring to FIG. 20, FIG. 20 is a schematic diagram of a cross-sectional structure of an electronic device 10 according to some other embodiments of this application. The first screen part 11 further includes a back surface S4 facing away from the first display surface S01, and an area on the back surface S4 opposite to the second opening G2 is provided with a reinforcement member 5. Structural strength of a part (that is, the first screen unit) of the first screen part 11 opposite to the second opening G2 may be enhanced by using the reinforcement member 5, to reduce a possibility of depression, deformation, and breakage.

A material of the reinforcement member 5 includes, but is not limited to, a metal and a plastic. The metal includes, but is not limited to, stainless steel, aluminum alloy, magnalium, titanium alloy, and the like. The plastic includes, but is not limited to, a polycarbonate (polycarbonate, PC), PC+glass fiber, and an ABS plastic (acrylonitrile butadiene styrene plastic). The reinforcement member 5 may be in a sheet shape, a strip shape, a thread shape, a plate shape, a sheet shape, a mesh shape, or the like. FIG. 20 is an exemplary description by using that the reinforcement member 5 is in the sheet shape. This is not specifically limited in this application.

The reinforcement member 5 may be soldered to the back surface S4 of the first screen part 11, or may be adhered to the back surface S4 of the first screen part 11, or may be integrally formed with a part that forms the back surface S4 and that is of the first screen part 11.

In some embodiments, the first screen part 11 may include a protection cover panel, a display panel (panel), and a support member that are stacked sequentially. The support member is also referred to as a bamboo book. A surface that faces away from the display panel and that is of the protection cover plate forms the first display surface S01, and a surface that faces away from the display panel and that is of the support member forms the back surface S4.

Based on the foregoing descriptions, the reinforcement member 5 is arranged on the support member. Specifically, the reinforcement member 5 may be soldered to the support member, or may be adhered to the support member, or may be integrally formed with the support member, that is, the reinforcement member 5 and the support member are an integral structural member.

Based on any one of the foregoing embodiments, the reinforcement member 5 may be arranged on an entire area of the back surface S4 opposite to the second opening G2, or may be arranged on a partial area of the back surface S4 opposite to the second opening G2. In some embodiments, referring to FIG. 20 again, the surround 322b1 of the core 32 includes a first surround portion A facing the first wall plate part 311a. In other words, the first surround portion A of the surround 322b1 is closest to the first wall plate part 311a. A projection of the first surround portion A on the first screen part 11 is a fourth projection f4. The reinforcement member 5 is located at a side that is away from the first projection f1 and that is of the fourth projection f4. In this way, the reinforcement member 5 can be prevented from affecting a height of the front cavity C1 at the first surround portion A, to ensure the sound effect of the speaker module 3.

Referring back to FIG. 18, in the electronic device 10, there are a gap between the speaker module 3 and the first middle frame (including the first frame 212 and the first middle plate 213) and a gap between the first middle frame and the first screen part 11. During operation of the core 32, air in the front cavity C1 easily leaks through these gaps, and voice leakage or a noise easily occurs.

To resolve the foregoing problem, referring to FIG. 18, the electronic device 10 further includes a first sealing ring 6. The first sealing ring 6 is located between the housing 31 of the speaker module 3 and the first middle frame. The first sealing ring 6 is arranged surrounding the first opening G1 and the first wall plate part 311a. The first sealing ring 6 is further arranged surrounding the second opening G2, the first middle plate part 213a, and the at least one sound output hole a.

In this way, the gap between the speaker module 3 and the first middle frame may be sealed by using the first sealing ring 6, to prevent air leakage, improve the sound effect of the speaker module 3, and avoid the voice leakage or the noise.

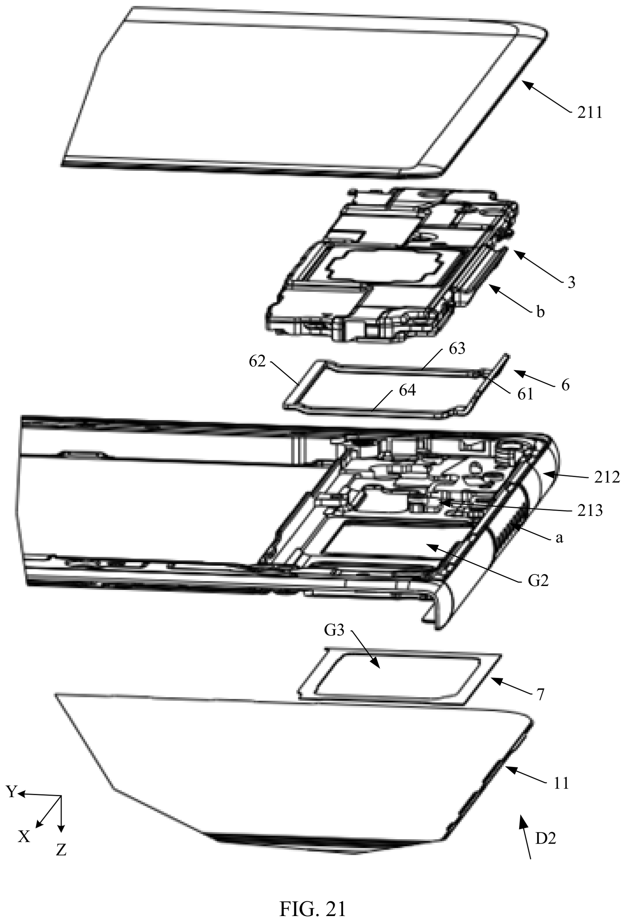

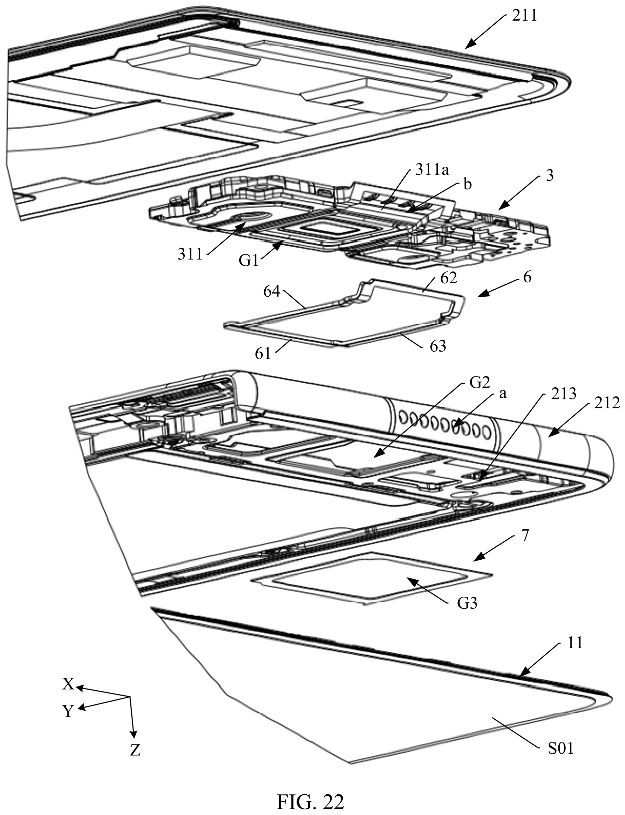

In some embodiments, referring to FIG. 18 again, and with reference to FIG. 21 and FIG. 22, FIG. 21 is a schematic diagram of an exploded structure of the electronic device 10 shown in FIG. 18, and FIG. 22 is a schematic diagram of a structure of the exploded structure shown in FIG. 21 when the exploded structure is viewed in a direction D2. The first sealing ring 6 includes a first sealing segment 61 and a second sealing segment 62 opposite to each other and spaced apart from each other.

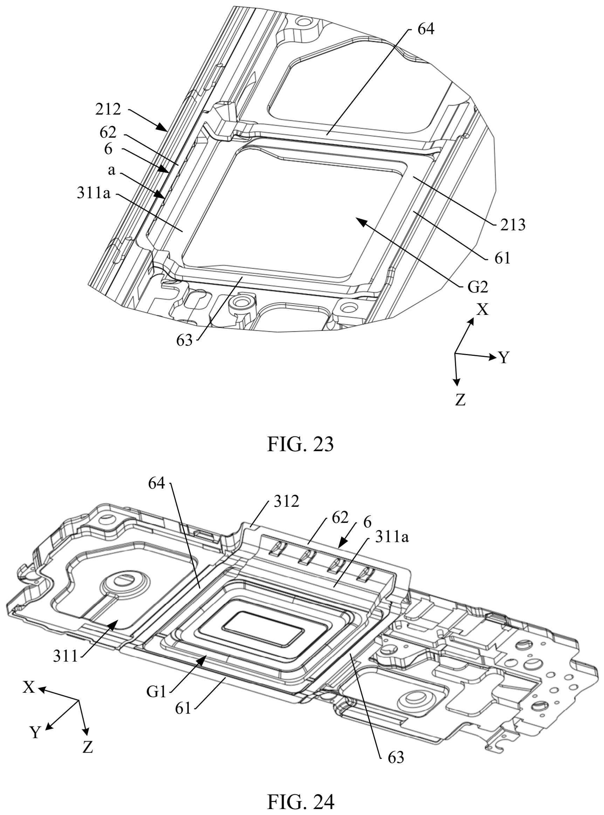

With reference to FIG. 23 and FIG. 24, FIG. 23 is a schematic diagram of an arrangement position of the first sealing ring 6 on the first middle frame in the electronic device 10 shown in FIG. 21 and FIG. 22, and FIG. 24 is a schematic diagram of an arrangement position of the first sealing ring 6 on the speaker module 3 in the electronic device 10 shown in FIG. 21 and FIG. 22.

The first sealing segment 61 is located between the first wall plate 311 and the first middle plate 213 of the speaker module 3. The first sealing segment 61 is located at a side that is away from the first wall plate part 311a and that is of the first opening G1. In addition, the first sealing segment 61 is further located at a side that is away from the first middle plate part 213a and that is of the second opening G2.

Referring to FIG. 18 mainly, the second sealing segment 62 is located between the second wall plate 312 of the speaker module 3 and the first frame segment 212a of the first frame 212, and the second sealing segment 62 is located at a side that is away from the first opening G1 and that is of the first wall plate part 311a. In addition, the second sealing segment 62 is further located at a side that is away from the first middle plate part 213a and that is of the at least one sound output hole a.

The first sealing segment 61 forms one end portion of the first sealing ring 6 in the length direction (that is, the X-axis direction) of the speaker module 3, the second sealing segment 62 forms the other end portion of the first sealing ring 6 in the length direction (that is, the X-axis direction) of the speaker module 3, and both end portions of the first sealing ring 6 in the X-axis direction are located between the housing 31 (specifically, the lower cover 31a) and the first middle frame, to avoid a sealing segment misalignment, ensure sealing effectiveness, and simplify a sealing difficulty.

Based on the foregoing descriptions, referring to FIG. 21 and FIG. 22 mainly, and with reference to FIG. 23 and FIG. 24, the first sealing ring 6 further includes a third sealing segment 63 and a fourth sealing segment 64 opposite to each other and spaced apart from each other. The third sealing segment 63 is connected between one end of the first sealing segment 61 and one end of the second sealing segment 62, and the fourth sealing segment 64 is connected between the other end of the first sealing segment 61 and the other end of the second sealing segment 62. The first sealing segment 61, the third sealing segment 63, the second sealing segment 62, and the fourth sealing segment 64 are sequentially connected head to tail, to form an annular sealing structure, so that effective sealing can be implemented, and the voice leakage or the noise is avoided.

Based on the foregoing descriptions, referring to FIG. 23 and FIG. 24 mainly, the third sealing segment 63 is located at one side of the first opening G1 and the first wall plate part 311a, and the fourth sealing segment 64 is located at the other side of the first opening G1 and the first wall plate part 311a.

A part of the third sealing segment 63 is located between the first wall plate 311 and the first middle plate 213, and another part of the third sealing segment 63 is located between the second wall plate 312 and the first frame segment 212a. Similarly, a part of the fourth sealing segment 64 is located between the first wall plate 311 and the first middle plate 213, and another part of the fourth sealing segment 64 is located between the second wall plate 312 and the first frame segment 212a.

The third sealing segment 63 forms one end portion of the first sealing ring 6 in the width direction (that is, the Y-axis direction) of the speaker module 3, the fourth sealing segment 64 forms the other end portion of the first sealing ring 6 in the width direction (that is, the Y-axis direction) of the speaker module 3, and both end portions of the first sealing ring 6 in the Y-axis direction are located between the housing 31 (specifically, the lower cover 31a) and the first middle frame, to avoid the sealing segment misalignment, ensure the sealing effectiveness, and simplify the sealing difficulty.

The first sealing ring 6 may be an adhesive material, a sealing foam, a sealing rubber, a sealing silicon, or the like. This is not specifically limited in this application. The adhesive material includes, but is not limited to, a sealant and a back adhesive.

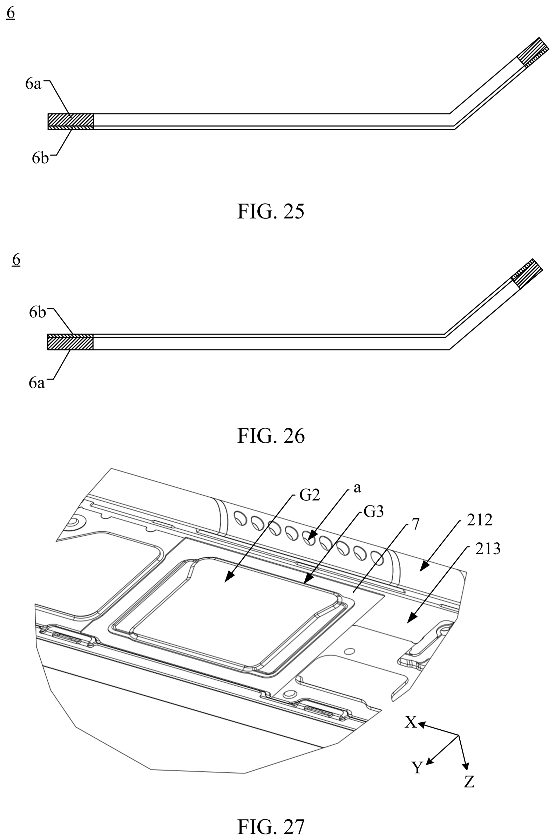

In some embodiments, referring to FIG. 25, FIG. 25 is a schematic diagram of a cross-sectional structure of a first sealing ring 6 according to some embodiments of this application. The first sealing ring 6 includes a first sealing foam layer 6a and a first sealing adhesive layer 6b. When the first sealing ring 6 is used in the electronic device 10 shown in FIG. 21 and FIG. 22, the first sealing foam layer 6a and the first sealing adhesive layer 6b are both arranged surrounding the first opening G1, the first wall plate part 311a, the second opening G2, the first middle plate part 213a, and the at least one sound output hole a. The first sealing foam layer 6a is in contact with the housing 31 of the speaker module 3, and the first sealing adhesive layer 6b is adhered between the first sealing foam layer 6a and the first middle frame.

In this way, the gap between the speaker module 3 and the first middle frame may be sealed by using the first sealing foam layer 6a and the first sealing adhesive layer 6b. In addition, the first sealing foam layer 6a may be compressed, and can adapt to different gaps between the speaker module 3 and the first middle frame. Therefore, an application range is wide.

In the foregoing embodiments, an assembly process of the speaker module 3, the first middle frame, and the first sealing ring 6 may be as follows: First, the first sealing ring 6 is adhered to the first middle frame by using the first sealing adhesive layer 6b. Then, the speaker module 3 is mounted on the first middle frame, and the speaker module 3 is in contact with the first sealing foam layer 6a of the first sealing ring 6. The assembly process is simple, and is convenient to operate.

In some other embodiments, referring to FIG. 26, FIG. 26 is a schematic diagram of a cross-sectional structure of a first sealing ring 6 according to some other embodiments of this application. The first sealing ring 6 includes the first sealing foam layer 6a and the first sealing adhesive layer 6b. When the first sealing ring 6 is used in the electronic device 10 shown in FIG. 21 and FIG. 22, the first sealing foam layer 6a and the first sealing adhesive layer 6b are both arranged surrounding the first opening G1, the first wall plate part 311a, the second opening G2, the first middle plate part 213a, and the at least one sound output hole a. The first sealing foam layer 6a is in contact with the first middle frame, and the first sealing adhesive layer 6b is adhered between the first sealing foam layer 6a and the housing 31 of the speaker module 3.

In this way, the gap between the speaker module 3 and the first middle frame may also be sealed by using the first sealing foam layer 6a and the first sealing adhesive layer 6b. In addition, the first sealing foam layer 6a may be compressed, and can adapt to different gaps between the speaker module 3 and the first middle frame. Therefore, the application range is wide.

In the foregoing embodiments, an assembly process of the speaker module 3, the first middle frame, and the first sealing ring 6 may be as follows: First, the first sealing ring 6 is adhered to the housing 31 of the speaker module 3 by using the first sealing adhesive layer 6b. Then the speaker module 3 with the first sealing ring 6 is mounted on the first middle frame, and the first sealing foam layer 6a of the first sealing ring 6 is in contact with the first middle frame. The assembly process is simple, and is convenient to operate.

Referring back to FIG. 18, and with reference to FIG. 21 and FIG. 22, the electronic device 10 further includes a second sealing ring 7. The second sealing ring 7 is arranged between the first middle plate 213 and the first screen part 11. Referring to FIG. 27, FIG. 27 is a schematic diagram of relative positions of the first middle frame and the second sealing ring 7 in the electronic device 10 shown in FIG. 21 and FIG. 22. The second sealing ring 7 is arranged surrounding the second opening G2.

In this way, the gap between the first middle plate 213 and the first screen part 11 may be sealed by using the second sealing ring 7, to prevent the air leakage, improve the sound effect of the speaker module 3, and avoid the voice leakage or the noise.

The second sealing ring 7 includes, but is not limited to, an adhesive material, a sealing foam, a sealing rubber, a sealing silicon, or the like. In some embodiments, the second sealing ring 7 may be an adhesive material. The adhesive material includes, but is not limited to, a back adhesive, a sealant, a hot melt adhesive, or a resin adhesive. While performing a sealing function, the adhesive material can further implement adhesion between the screen 1 and the first middle plate 213, and can reduce structural complexity of the electronic device 10. When the adhesive material is the back adhesive, the adhesive material is simply adhered, and there is no need for operations such as glue coating or glue scraping.

In some embodiments, referring to FIG. 27 mainly, the second sealing ring 7 is in a sheet shape. The second sealing ring 7 is stacked between the first screen part 11 and the first middle plate 213. A third opening G3 is arranged on the second sealing ring 7 at a position opposite to the second opening G2. In this way, a sealing area of the second sealing ring 7 is large at a periphery of the second opening G2, which is beneficial to improving air-sealing and improving the sound effect of the speaker module 3.

In addition, the following describes the dustproof structure 4 provided in some other embodiments of this application.

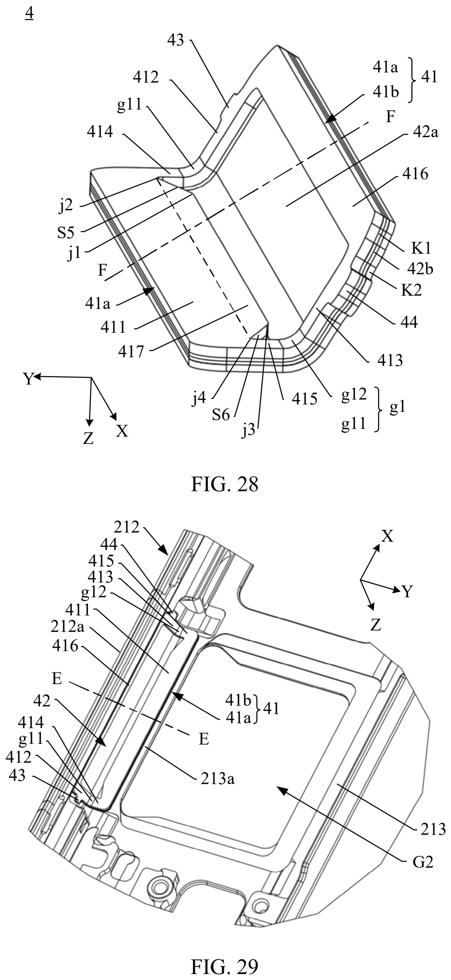

Referring to FIG. 28, FIG. 28 is a three-dimensional view of a dustproof structure 4 according to some embodiments of this application. The dustproof structure 4 includes a support frame 41 and a dustproof mesh 42.

A material of the support frame 41 includes, but is not limited to, at least one of polycarbonate (polycarbonate, PC), a glass fiber, a stainless steel, and a foam. When the material of the support frame 41 includes at least one of the PC, the glass fiber, and the stainless steel, the support frame 41 has high stiffness and good structural stability. When the material of the support frame 41 is the foam, the support frame 41 may be a flat-plate shaped support frame that is bent and formed. The flat-plate shaped support frame is simply formed, and it is convenient for manufacturing.

The support frame 41 includes a first frame plate 41a and a second frame plate 41b. The first frame plate 41a intersects the second frame plate 41b. In other words, an angle is formed between the first frame plate 41a and the second frame plate 41b. The angle is greater than 0° and less than 180°. Optionally, the first frame plate 41a and the second frame plate 41b may be greater than or equal to 90° and less than 180°. For example, the angle may be equal to 90°, 110°, 135°, 150°, or 175°. This is not specifically limited herein.

The first frame plate 41a includes a first frame plate segment 411.

The second frame plate 41b includes a second frame plate segment 412 and a third frame plate segment 413. The second frame plate segment 412 is connected to one end of the first frame plate segment 411, and the third frame plate segment 413 is connected to the other end of the first frame plate segment 411.

Based on the foregoing descriptions, referring to FIG. 28 again, the dustproof mesh 42 is supported between the first frame plate segment 411, the second frame plate segment 412, and the third frame plate segment 413.

In this way, when the dustproof structure 4 is used in the electronic device 10, referring back to FIG. 18, the dustproof structure 4 is located between the first screen part 11 and the housing 31 of the speaker module 3, the first frame plate 41a of the dustproof structure 4 is opposite to the first wall plate 311, and the second frame plate 41b of the dustproof structure 4 is opposite to the second wall plate 312. Specifically, the second frame plate segment 412 and the third frame plate segment 413 in the second frame plate 41b are respectively located at two sides of the sound output channel b in the X-axis direction. The dustproof mesh 42 of the dustproof structure 4 covers an outlet end of the sound output channel b. The outlet end of the sound output channel b refers to an end that is away from the front cavity C1 and that is of the sound output channel b, and the outlet end of the sound output channel b is located at the second wall plate 312.

In this way, the first frame plate segment 411 in the dustproof structure 4 is arranged parallel or approximately parallel to an XY plane, and an occupation height of the second frame plate 41b in the Z-axis direction can be reduced, so that an occupation height of the whole dustproof structure 4 in the Z-axis direction can be reduced, to facilitate thinning of the electronic device 10.

In the foregoing embodiment, the first frame plate 41a is opposite to the first wall plate 311. Specifically, the first frame plate 41a may be in contact with the first wall plate 311, or the first frame plate 41a and the first wall plate 311 may be spaced apart from each other. This is not specifically limited herein.

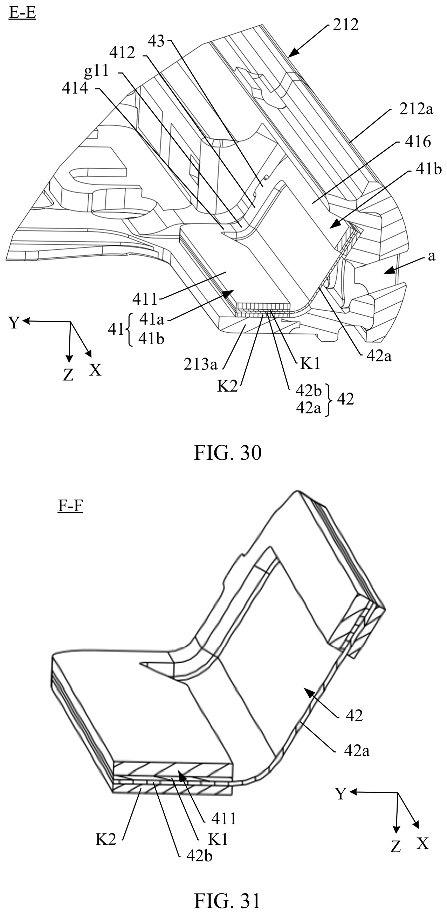

In some embodiments, referring to FIG. 18 again, and with reference to FIG. 29 and FIG. 30, FIG. 29 is a three-dimensional view of an assembly structure of the dustproof structure 4 and the first middle frame in the electronic device 10 shown in FIG. 18, and FIG. 30 is a three-dimensional sectional view of the assembly structure shown in FIG. 29 in a line E-E. When the electronic device 10 includes the first middle frame, the dustproof structure 4 is located between the first middle plate 213 of the first middle frame and the housing 31 of the speaker module 3, the first frame plate 41a of the dustproof structure 4 is arranged on a surface that faces the first wall plate part 311a and that is of the first middle plate part 213a in the first middle plate 213, and the first frame plate 41a and the first wall plate part 311a are spaced apart from each other. In this way, the first frame plate 41a does not block air flow in the sound output channel b. In addition, and the first middle frame is used as a support framework in the electronic device 10, and can form a stable support for the first frame plate 41a.

In some embodiments, referring to FIG. 18 again, and with reference to FIG. 29 and FIG. 30, the second frame plate 41b is located between the second wall plate 312 and the first frame segment 212a, the second frame plate 41b is arranged on the first frame segment 212a, and the dustproof mesh 42 further covers the at least one sound output hole a on the first frame segment 212a. In this way, the first frame plate 41a and the second frame plate 41b both are arranged on the first middle frame, which can reduce difficulty of arranging the dustproof structure 4 in the electronic device 10.

In some embodiments, referring to FIG. 28 again, the support frame 41 further includes an arc transition frame plate g1. The arc transition frame plate g1 is connected between the first frame plate 41a and the second frame plate 41b. Specifically, the arc transition frame plate g1 includes a first arc transition frame plate segment g11 and a second arc transition frame plate segment g12. The first arc transition frame plate segment g11 is connected between the one end of the first frame plate segment 411 and the second frame plate segment 412. The second arc transition frame plate segment g12 is connected between the other end of the first frame plate segment 411 and the third frame plate segment 413.

Based on the foregoing descriptions, the dustproof mesh 42 is supported between the first frame plate segment 411, the second frame plate segment 412, the third frame plate segment 413, the first arc transition frame plate segment g11, and the second arc transition frame plate segment g12.

In this way, smooth transition is performed by using the first arc transition frame plate segment g11 and the second arc transition frame plate segment g12, to avoid an acute angle at an intersection location between the first frame plate 41a and the second frame plate 41b, avoid scuffing other components, and reduce an abrasion.

The first frame plate segment 411 may belong to a part of the first frame plate 41a. In other words, in addition to the first frame plate segment 411, the first frame plate 41a may further include another frame plate segment.

For example, in the embodiment shown in FIG. 28, in addition to the first frame plate segment 411, the first frame plate 41a further includes a fourth frame plate segment 414 and a fifth frame plate segment 415. The fourth frame plate segment 414 and the fifth frame plate segment 415 are located between the first frame plate segment 411 and the second frame plate 41b.

The fourth frame plate segment 414 is connected between one end of the first frame plate segment 411 and the first arc transition frame plate segment g11. The fifth frame plate segment 415 is connected between the other end of the first frame plate segment 411 and the second arc transition frame plate segment g12.

The dustproof mesh 42 is supported between the first frame plate segment 411, the second frame plate segment 412, the third frame plate segment 413, the fourth frame plate segment 414, the fifth frame plate segment 415, the first arc transition frame plate segment g11, and the second arc transition frame plate segment g12.

In this way, a distance from the first frame plate segment 411 to the second frame plate 41b may be increased by using the fourth frame plate segment 414 and the fifth frame plate segment 415, which is beneficial to arranging the first frame plate segment 411 in a flat area. In addition, transition is performed by using the fourth frame plate segment 414 and the fifth frame plate segment 415, so that the first arc transition frame plate segment g11 is located between the fourth frame plate segment 414 and the second frame plate segment 412, and the second arc transition frame plate segment g12 is located between the fifth frame plate segment 415 and the third frame plate segment 413. Therefore, when the support frame 41 is formed by using a bending process, bending force can be reduced, and difficulty of bending the support frame 41 can be reduced.

Based on the foregoing descriptions, optionally, referring to FIG. 28 again, the first frame plate 41a further includes an extended frame plate segment 417. The extended frame plate segment 417 is located between the first frame plate segment 411 and the second frame plate 41b, and is connected to the first frame plate segment 411.

The extended frame plate segment 417 is further located between the fourth frame plate segment 414 and the fifth frame plate segment 415, the extended frame plate segment 417 and the fourth frame plate segment 414 are spaced apart from each other, and the extended frame plate segment 417 and the fifth frame plate segment 415 are spaced apart from each other.

In this way, an area of the first frame plate 41a can be increased by using the extended frame plate segment 417, which is beneficial to increasing structural strength of the dustproof structure 4 and fixed strength on the first middle plate part 213a. In addition, because the extended frame plate segment 417 and the fourth frame plate segment 414 are spaced apart from each other, and the extended frame plate segment 417 and the fifth frame plate segment 415 are spaced apart from each other, the extended frame plate segment 417 does not affect the bending process of the support frame 41.

In some embodiments, referring to FIG. 28 again, a side that faces the fourth frame plate segment 414 and that is of the extended frame plate segment 417 is a first side S5. An edge that faces the second frame plate 41b and that is of the first side S5 is a first edge j1, and an edge that faces the first frame plate segment 411 and that is of the first side S5 is a second edge j2. From the first edge j1 to the second edge j2, the first side S5 is inclined to a direction close to the fourth frame plate segment 414.

In this way, an area of the extended frame plate segment 417 can be increased as much as possible while avoiding the extended frame plate segment 417 from affecting the bending process of the fourth frame plate segment 414, to improve the structural strength of the dustproof structure 4 and the fixed strength on the first middle plate part 213a.

Similarly, referring to FIG. 28 again, a side that faces the fifth frame plate segment 415 and that is of the extended frame plate segment 417 is a second side S6. An edge that faces the second frame plate 41b and that is of the second side surface S6 is a third edge j3, and an edge that faces the first frame plate segment 411 and that is of the second side surface S6 is a fourth edge j4. From the third edge j3 to the fourth edge j4, the second side S6 is inclined to a direction close to the fifth frame plate segment 415.

In this way, an area of the extended frame plate segment 417 can be increased as much as possible while avoiding the extended frame plate segment 417 from affecting the bending process of the fifth frame plate segment 415, to improve the structural strength of the dustproof structure 4 and the fixed strength on the first middle plate part 213a.

In other embodiments, the first frame plate 41a may alternatively include only the first frame plate segment 411, that is, there is no other segment other than the first frame plate segment 411 in the first frame plate 41a.

In some embodiments, referring to FIG. 28 again, the second frame plate 41b further includes a sixth frame plate segment 416. One end of the sixth frame plate segment 416 is connected to an end that is away from the first frame plate segment 411 and that is of the second frame plate segment 412, and the other end of the sixth frame plate segment 416 is connected to an end that is away from the first frame plate segment 411 and that is of the third frame plate segment 413.

Based on the foregoing descriptions, the dustproof mesh 42 is supported between the first frame plate segment 411, the second frame plate segment 412, the third frame plate segment 413, the fourth frame plate segment 414, the fifth frame plate segment 415, the first arc transition frame plate segment g11, the second arc transition frame plate segment g12, and the sixth frame plate segment 416.

In this way, the first frame plate segment 411, the fourth frame plate segment 414, the first arc transition frame plate segment g11, the second frame plate segment 412, the sixth frame plate segment 416, the third frame plate segment 413, the second arc transition frame plate segment g12, and the fifth frame plate segment 415 are sequentially connected head to tail, to form an annular frame structure, the dustproof mesh 42 is supported between the annular frame structures, and the support frame 41 can effectively support the dustproof mesh 42. In addition, the whole support frame 41 is in an L-shape. The support frame 41 has a simple structure, and it is convenient for manufacturing.

In some other embodiments, in the dustproof structure 4 shown in FIG. 28, one or more of the fourth frame plate segment 414, the fifth frame plate segment 415, the first arc transition frame plate segment g11, the second arc transition frame plate segment g12, the sixth frame plate segment 416, and the extended frame plate segment 417 may not be arranged on the support frame 41.

When the dustproof structure 4 shown in FIG. 28 is used in the electronic device 10, referring to FIG. 18, FIG. 29, and FIG. 30 together, the sixth frame plate segment 416 is located at a side that is away from the first middle plate 213 and that is of the at least one sound output hole a, and the sixth frame plate segment 416 is arranged between the second wall plate 312 and the first frame segment 212a.

Based on the foregoing descriptions, referring to FIG. 18, the second sealing segment 62 of the first sealing ring 6 is also arranged between the second wall plate 312 and the first frame segment 212a. Based on this, optionally, referring to FIG. 18 again, the sixth frame plate segment 416 may be located between the second sealing segment 62 and the first frame segment 212a. In this way, the sixth frame plate segment 416 and the second sealing segment 62 are stacked at a same height position on the first frame segment 212a, which is beneficial to reducing an occupied height of an entirety formed by the sixth frame plate segment 416 and the second sealing segment 62 in the Z-axis direction while ensuring an adhesion width of the sixth frame plate segment 416 and a sealing width of the second sealing segment 62, thereby further facilitating thinning of the electronic device 10.

Referring to FIG. 31, FIG. 31 is a three-dimensional sectional view of the dustproof structure 4 shown in FIG. 28 in a line F-F. In this embodiment, the dustproof mesh 42 includes the main portion 42a and the edge portion 42b located at an edge of the main portion 42a.

The main portion 42a is located in an area surrounded by the first frame plate segment 411, the second frame plate segment 412, and the third frame plate segment 413, and the edge portion 42b is stacked on and fixedly connected to the first frame plate segment 411, the second frame plate segment 412, and the third frame plate segment 413. Therefore, the dustproof mesh 42 is supported in the support frame 41. The structure is simple, and is convenient to be fixed.

A manner of fixedly connecting the edge portion 42b to the first frame plate segment 411, the second frame plate segment 412, and the third frame plate segment 413 includes, but is not limited to, clamping, screwing connecting, and adhering.

In some embodiments, referring to FIG. 31 again, the support frame 41 further includes the first adhesive material layer K1. The first adhesive material layer K1 is adhered between the edge portion 42b and the first frame plate segment 411, the second frame plate segment 412, and the third frame plate segment 413.

In this way, the edge portion 42b is adhered to the first frame plate segment 411, the second frame plate segment 412, and the third frame plate segment 413 by using the first adhesive material layer K1. The first adhesive material layer K1 has a small thickness, which is beneficial to reducing a thickness of the dustproof structure. In addition, the first adhesive material layer K1 can implement sealing, to prevent impurities from entering the first frame plate segment 411, the second frame plate segment 412, and the third frame plate segment 413.

In the foregoing embodiments, the first adhesive material layer K1 includes, but is not limited to, a back adhesive, a sealant, a hot melt adhesive, or a resin adhesive. In this embodiment, the first adhesive material layer K1 may be the back adhesive. An adhesive force of the back adhesive is strong, so that connection strength can be ensured, and an application operation can be facilitated.

A manner of fixing the support frame 41 on the first middle frame may also include, but is not limited to, clamping, screwing connecting, and adhering.

In some embodiments, referring to FIG. 31 again, the support frame 41 further includes the second adhesive material layer K2, and the second adhesive material layer K2 is arranged on a surface that faces away from the support frame 41 and that is of the edge portion 42b. When the dustproof structure 4 is used in the electronic device, referring back to FIG. 30, the support frame 41 is adhered to the first middle frame by using the second adhesive material layer K2. The second adhesive material layer K2 has a small thickness, which is beneficial to reducing a height of the dustproof structure 4 protruding from a surface of the first middle frame. In addition, the second adhesive material layer K2 can implement sealing, to prevent impurities from entering the support frame 41.

Similarly, the second adhesive material layer K2 includes, but is not limited to, a back adhesive, a sealant, a hot melt adhesive, or a resin adhesive. In this embodiment, the second adhesive material layer K2 may be the back adhesive. An adhesive force of the back adhesive is strong, so that connection strength can be ensured, and an application operation can be facilitated.

In some other embodiments, the second adhesive material layer K2 may also be arranged on a surface that faces away from the first adhesive material layer K1 and that is of the support frame 41. When the dustproof structure 4 is used in the electronic device, the support frame 41 is also adhered to the first middle frame by using the second adhesive material layer K2. It is also beneficial to reducing a height of the support frame 41, and the second adhesive material layer K2 can implement effective sealing, to prevent impurities from entering the support frame 41.

To facilitate positioning of the dustproof structure 4 on the first middle frame, in some embodiments, referring back to FIG. 28, an edge of the second frame plate segment 412 away from the third frame plate segment 413 is provided with a first positioning portion 43, and an edge that is away from the second frame plate segment 412 and that is of the third frame plate segment 413 is provided with a second positioning portion 44. The first positioning portion 43 and the second positioning portion 44 are flange portions.

Based on the foregoing descriptions, referring to FIG. 29, an inner surface of the first frame segment 212a is provided with a first positioning notch and a second positioning notch. The first positioning portion 43 is accommodated in the first positioning notch, and the second positioning portion 44 is accommodated in the second positioning notch. Therefore, the dustproof structure 4 can be positioned by using the first positioning portion 43 and the first positioning notch, and the second positioning portion 44 and the second positioning notch, to prevent the dustproof structure 4 from being misaligned during mounting or in subsequent use.

In some other embodiments, the first positioning portion 43 and the second positioning portion 44 may alternatively be notches. Based on this, the inner surface of the first frame segment 212a is provided with a flange portion, and the flange portion is accommodated in the notch, to implement positioning and prevent misalignment.

Based on any one of the foregoing embodiments, the support frame 41 may be an integral structural member, or may be formed by assembling a plurality of structural members. This is not specifically limited herein. In this embodiment, an example in which the support frame 41 is the integral structural member is used for description.

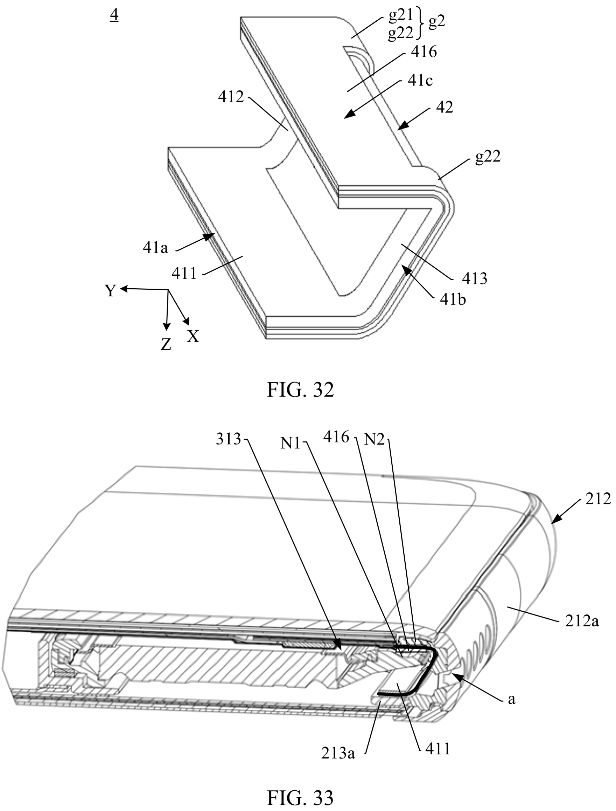

Referring to FIG. 32, FIG. 32 is a schematic diagram of a structure of a dustproof structure 4 according to some other embodiments of this application. In addition to the first frame plate 41a and the second frame plate 41b in the foregoing embodiments, the support frame 41 in the dustproof structure 4 further includes a third frame plate 41c.

The third frame plate 41c is connected to an end that is away from the first frame plate 41a and that is of the second frame plate 41b, and intersects the second frame plate 41b. The third frame plate 41c and the first frame plate 41a are spaced apart from each other, and the third frame plate 41c and the first frame plate 41a are located at a same side of the second frame plate 41b.

Based on the foregoing descriptions, the third frame plate 41c includes a sixth frame plate segment 416. One end of the sixth frame plate segment 416 is connected to an end that is away from the first frame plate segment 411 and that is of the second frame plate segment 412, and the other end of the sixth frame plate segment 416 is connected to an end that is away from the first frame plate segment 411 and that is of the third frame plate segment 413.

The dustproof mesh 42 is at least supported between the first frame plate segment 411, the second frame plate segment 412, the third frame plate segment 413, and the sixth frame plate segment 416.

In this way, a frame surface on which the support frame 41 is located is approximately in a U-shape, and the first frame plate segment 411 and the sixth frame plate segment 416 are both arranged parallel or approximately parallel to the XY plane. This can further reduce an occupation height of the whole dustproof structure 4 in the Z-axis direction, to facilitate thinning of the electronic device 10.

When the dustproof structure 4 is used in the electronic device 10, referring to FIG. 33, FIG. 33 is a schematic diagram of a cross-sectional structure of the electronic device 10 according to some other embodiments of this application. The first frame segment 212a includes an extended portion N2 located at a side facing an outer surface of the third wall plate 313. The sixth frame plate segment 416 is located between the third wall plate 313 and the extended portion N2 of the first frame segment 212a. Specifically, the sixth frame plate segment 416 is located between the end portion N1 of the third wall plate 313 and the extended portion N2 of the first frame segment 212a. In this way, the support frame 41 may be entirely arranged on the first middle frame, which can reduce assembly difficulty of the dustproof structure 4 in the electronic device.

The foregoing embodiments are described by using an example in which the dustproof structure 4 cooperates with the speaker module 3 shown in FIG. 14 to FIG. 16. In some other embodiments, the dustproof structure 4 may also cooperate with another speaker module 3.

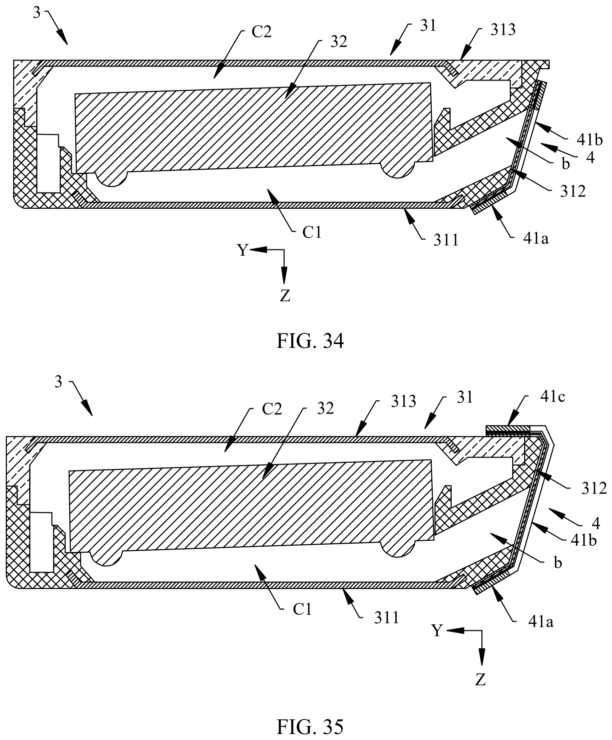

For example, referring to FIG. 34, FIG. 34 is a schematic diagram of an assembly structure of a speaker module 3 and a dustproof structure 4 according to some other embodiments of this application. In this embodiment, the housing 31 of the speaker module 3 includes the first wall plate 311 and the third wall plate 313 opposite to each other, and the second wall plate 312 connected between the first wall plate 311 and the third wall plate 313. The outlet end of the sound output channel b of the speaker module 3 is arranged on the second wall plate 312, the core 32 of the speaker module 3 is arranged in the housing 31, the front cavity C1 is formed between the core 32 and the first wall plate 311, and the rear cavity C2 is formed between the core 32 and the third wall plate 313. The first frame plate 41a of the dustproof structure 4 is located at a side facing an outer surface of the first wall plate 311, and is in contact with the first wall plate 311. The second frame plate 41b of the dustproof structure 4 is located at a side facing an outer surface of the second wall plate 312, and the dustproof mesh 42 covers the outlet end of the sound output channel b.

In this way, the thickness of the speaker module 3 may be compressed in the Z-axis direction by using an L-shaped dustproof structure 4, to thin the entire thickness of the electronic device 10.

For another example, referring to FIG. 35, FIG. 35 is a schematic diagram of an assembly structure of a speaker module 3 and a dustproof structure 4 according to some other embodiments of this application. In this embodiment, the dustproof structure 4 is in a U-shape. The first frame plate 41a of the dustproof structure 4 is located at a side facing the outer surface of the first wall plate 311, and is in contact with the first wall plate 311. The third frame plate 41c of the dustproof structure 4 is located at a side facing the outer surface of the third wall plate 313, and is in contact with the third wall plate 313. The second frame plate 41b of the dustproof structure 4 is located at a side facing the outer surface of the second wall plate 312. The dustproof mesh 42 covers an opening end of the sound output channel b.

In this way, the thickness of the speaker module 3 may be further compressed in the Z-axis direction by using the U-shaped dustproof structure 4, to thin the entire thickness of the electronic device 10.

The foregoing embodiments describe the application of the speaker module 3 and the dustproof structure 4 in the foldable-screen device. In other embodiments, the speaker module 3 and the dustproof structure 4 may further be used in an electronic device such as a straight-panel mobile phone or a tablet computer, to be beneficial to reducing thickness of the straight-panel mobile phone or the tablet computer and improve portability and tactile experience.

In the descriptions of this specification, the specified specific features, structures, materials, or characteristics may be combined in a proper manner in any one or more of the embodiments or examples.

In conclusion, it should be noted that, the foregoing embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or substitutions do not cause the essence of corresponding technical solutions to depart from the spirit and scope of the technical solutions in embodiments of this application.

## Claims

1. An electronic device, comprising:
a screen, wherein the screen comprises a first screen part, and the first screen part comprises a first display surface; and
a speaker module, wherein the speaker module is located at a side that faces away from the first display surface and that is of the first screen part, and the speaker module comprises a core, and
a front cavity of the speaker module is arranged between the core and the first screen part, and at least a part of the first screen part forms a wall plate of the front cavity.

2. The electronic device according to claim 1, wherein the speaker module further comprises a housing, and the core is located in the housing; and
a wall plate that faces the first screen part and that is of the housing is a first wall plate, the first wall plate is provided with a first opening, and the first opening is located between the core and the first screen part.

3. The electronic device according to claim 2, wherein the first wall plate comprises a first wall plate part, and the first wall plate part is located at a peripheral side of the first opening; and
a sound output channel of the speaker module is arranged between the first wall plate part and the first screen part, the sound output channel communicates with the front cavity, and the first wall plate part forms a wall plate of the sound output channel.

4. The electronic device according to claim 3, wherein an end that faces the first opening and that is of the first wall plate part is a first end, and an end that is away from the first opening and that is of the first wall plate part is a second end; and
the first wall plate part is inclined to a direction away from the first screen part from the first end to the second end.

5. The electronic device according to claim 4, further comprising:
a first middle frame, wherein the first middle frame comprises a first middle plate, the first middle plate is located between the first screen part and the speaker module, the first middle plate is provided with a second opening, and at least a part of the second opening is opposite to at least a part of the first opening.

6. The electronic device according to claim 5, wherein the first middle plate comprises a first middle plate part, the first middle plate part is located at a peripheral side of the second opening, and the first middle plate part is opposite to the first wall plate part; and
the sound output channel of the speaker module is located between the first wall plate part and the first middle plate part, and the first middle plate part forms the wall plate of the sound output channel.

7. The electronic device according to claim 6, wherein an edge that faces the first opening and that is of the first wall plate part is a first edge, and a projection of the first edge on the first screen part is a first projection;
an edge of the first middle plate at the second opening comprises a second edge facing the first middle plate part and a third edge away from the first middle plate part, a projection of the second edge on the first screen part is a second projection, and a projection of the third edge on the first screen part is a third projection; and
the first projection is located between the second projection and the third projection.

8. The electronic device according to claim 6 or 7, wherein the first middle frame further comprises a first frame segment, the first frame segment is connected to an edge of the first middle plate, and the first frame segment is located at a side that is away from the second opening and that is of the first middle plate part; and
the first frame segment is provided with at least one sound output hole, and the at least one sound output hole communicates with the sound output channel.

9. The electronic device according to claim 8, further comprising:
a first sealing ring, wherein the first sealing ring is located between the housing of the speaker module and the first middle frame, the first sealing ring is arranged surrounding the first opening and the first wall plate part, and the first sealing ring is further arranged surrounding the second opening, the first middle plate part, and the at least one sound output hole.

10. The electronic device according to claim 9, wherein the housing further comprises a second wall plate, the second wall plate is connected to an edge of the first wall plate, and the second wall plate is located at a side that is away from the first opening and that is of the first wall plate part;
the first sealing ring comprises a first sealing segment and a second sealing segment opposite to each other and spaced apart from each other;
the first sealing segment is located between the first wall plate and the first middle plate, the first sealing segment is located at a side that is away from the first wall plate part and that is of the first opening, and the first sealing segment is further located at a side that is away from the first middle plate part and that is of the second opening; and
the second sealing segment is located between the second wall plate and the first frame segment, the second sealing segment is located at a side that is away from the first opening and that is of the first wall plate part, and the second sealing segment is further located at a side that is away from the first middle plate part and that is of the at least one sound output hole.

11. The electronic device according to claim 10, wherein the first sealing ring further comprises a third sealing segment and a fourth sealing segment opposite to each other and spaced apart from each other;
the third sealing segment is connected between one end of the first sealing segment and one end of the second sealing segment, and the fourth sealing segment is connected between the other end of the first sealing segment and the other end of the second sealing segment;
the third sealing segment is located at one side of the first opening and the first wall plate part, and the fourth sealing segment is located at the other side of the first opening and the first wall plate part; and
a part of the third sealing segment is located between the first wall plate and the first middle plate, and another part of the third sealing segment is located between the second wall plate and the first frame segment; and a part of the fourth sealing segment is located between the first wall plate and the first middle plate, and another part of the fourth sealing segment is located between the second wall plate and the first frame segment.

12. The electronic device according to any one of claims 9 to 11, wherein the first sealing ring comprises a first sealing foam layer and a first sealing adhesive layer, and both the first sealing foam layer and the first sealing adhesive layer are arranged surrounding the first opening, the first wall plate part, the second opening, the first middle plate part, and the at least one sound output hole; and
the first sealing foam layer is in contact with the housing of the speaker module, and the first sealing adhesive layer is adhered between the first sealing foam layer and the first middle frame; or
the first sealing foam layer is in contact with the first middle frame, and the first sealing adhesive layer is adhered between the first sealing foam layer and the housing of the speaker module.

13. The electronic device according to any one of claims 5 to 12, further comprising:
a second sealing ring, wherein the second sealing ring is located between the first middle plate and the first screen part, and the second sealing ring is arranged surrounding the second opening.

14. The electronic device according to claim 13, wherein the second sealing ring is an adhesive material.

15. The electronic device according to any one of claims 5 to 14, wherein the first screen part further comprises a back surface facing away from the first display surface, and an area that is opposite to the second opening and that is on the back surface is provided with a reinforcement member.

16. The electronic device according to claim 15, wherein the edge that faces the first opening and that is of the first wall plate part is the first edge, and the projection of the first edge on the first screen part is the first projection;
the core comprises a vibration diaphragm, and the vibration diaphragm comprises a surround, the surround comprises a first surround portion facing the first wall plate part, and a projection of the first surround portion on the first screen part is a fourth projection; and
the reinforcement member is located at a side that is away from the first projection and that is of the fourth projection.

17. The electronic device according to any one of claims 1 to 16, wherein the screen further comprises a second screen part connected to the first screen part; and
the electronic device further comprises a first housing, a second housing, and a rotation axis mechanism, wherein the first screen part is arranged on the first housing, the second screen part is arranged on the second housing, the rotation axis mechanism is arranged between the first housing and the second housing, and the speaker module is accommodated in the first housing.
